# EUROPÄISCHE PATENTSCHRIFT

(11) **EP 0 721 976 B1**
(45) Veröffentlichungstag und Bekanntmachung des Hinweises auf die Patenterteilung: **06.10.2004**
(21) Anmeldenummer: 95119256.6
(22) Anmeldetag: 07.12.1995
(51) Int. Cl.: C09K 11/06

(54) **Fluoreszierende Materialien**
Fluorescent materials
Matériaux fluorescents

(30) Priorität: 11.01.1995 DE 19500634
(43) Veröffentlichungstag der Anmeldung: 17.07.1996
(73) Patentinhaber: Fraunhofer-Gesellschaft zur Förderung der angewandten Forschung e.V., 80686 München (DE)
(72) Erfinder: Popall, Michael, Dr. rer. nat., D-97072 Würzburg (DE); Neumann, Gert, Dr. rer. nat., D-97080 Würzburg (DE); Schmidt, Holger, D-97209 Veitshöchheim (DE); Spanhel, Lubomir, Dr. rer. nat., D-97070 Würzburg (DE)

(56) Entgegenhaltungen:
- EP-A- 0 612 772
- J. SOL-GEL SCI. TECHNOL. (1994), 2(1/2/3), 627-34 CODEN: JSGTEC;ISSN: 0928-0707, 1994, XP002009809 MATTHEWS, LOWELL R. ET AL: "Luminescence behavior of inorganic and metalorganic europium(III) dopants incorporated into silica and epoxy-diol ORMOSIL sol-gel hosts"
- JOURNAL OF NON-CRYSTALLINE SOLIDS, Bd. 178, 3.November 1994, Seiten 44-51, XP000483314 MATTHEWS L R ET AL: "CONCENTRATION EFFECTS ON THE LUMINESCENCE BEHAVIOR OF EUROPIUM (III) CHLORIDE- AND ORGANOEUROPIUM-DOPED SILICATE GELS"
- DATABASE INSPEC INSTITUTE OF ELECTRICAL ENGINEERS, STEVENAGE, GB Inspec No. 5087944, BESCHER E P ET AL: "Rare earth/organic dye nanocomposites by the sol-gel method" XP002009859 & MOLECULARLY DESIGNED ULTRAFINE/NANOSTRUCTURED MATERIALS SYMPOSIUM, MOLECULARLY DESIGNED ULTRAFINE/NANOSTRUCTURED MATERIALS SYMPOSIUM, SAN FRANCISCO, CA, USA, 4-8 APRIL 1994, 1994, PITTSBURGH, PA, USA, MATER. RES. SOC, USA, Seiten 135-139,

## Beschreibung

Die Erfindung betrifft fluoreszierende Materialien mit einer Matrix auf der Basis von Kieselsäurepolykondensaten bzw. Kieselsäureheteropolykondensaten, mit in der Matrix eingelagerten Er³⁺-Ionen und mit gegebenenfalls weiteren Zusatzstoffen. Ferner betrifft die Erfindung die Herstellung dieser Materialien sowie deren Verwendung.

Fluoreszierende, Erbium-haltige Materialien finden z.B. Anwendung in optischen Verstärkern und bestehen im wesentlichen aus einer Matrix mit darin eingelagerten Er³⁺-Ionen. Als Matrixmaterialien werden über eine Schmelztechnik gefertigte Phosphosilicatgläser, Thalliumsilicatgläser und reine Kieselsäuregläser verwendet. Zur Herstellung werden Verfahren der FHT-Technik, des Ionenaustausches bzw. der Sputtertechnik eingesetzt. Erste Ergebnisse zur Lichtverstärkung an fluoreszierenden Er-Silicatglas-Wellenleitern liegen bereits vor. (F. Chenard, "New Applications abound for Rare-Earth-doped Fibers", May 1994 in Photonics Spectra; R. Reisfeld et al., Proc. 2-th Int. School of Spectroscopy of Transitions Elements, 1991, World Scientific Publishing, Singapore; Q. He, S. Lafreniere et al., SPIE Vol. 1794 "Integrated optical circuits II", 1992, 303.308.).

Das CA-Abstract 5087944 beschreibt drei verschiedene Routen, um zu fluoreszierendem Material zu gelangen. Die erste Route verwendet "low hydroxyl ormosil matrices", erzeugt durch Umsetzung von Methyl-modifiziertem Silicium-halogenid mit tertiären Alkoholen und anschließender Dotierung des Hydrolysates/Kondensates mit Erbiumiodid. Die zweite Route benutzt Gele, hergestellt aus Tetramethoxysilan und dotiert mit Erbium-Komplexen und Farbstoffen. Die dritte Route erfolgt offensichtlich ohne den Einsatz von Erbium-Ionen.

Nachteile der vorgenannten Materialien sind jedoch die geringe Löslichkeit der Er³⁺-Ionen in der Matrix, sowie unerwünschtes Konzentrationsquenching durch benachbarte Er³⁺-Ionen. Dadurch wird die Quantenausbeute der Fluoreszenz und die Effizienz der Lichtverstärkung dieser Materialien stark reduziert. Ferner sind die Herstellungsverfahren aufwendig und kostenintensiv.

Aus der US 3,927,224 sind lumineszierende Materialien mit einer anorganischen, glasartigen Matrix bekannt, die über einen Sol-Gel-Prozeß gewonnen werden. Dazu werden Siliciumalkoxide und Metallalkoxide einer hydrolytischen Kondensation unterzogen, mit lumineszierenden Komponenten versetzt und so lange erhitzt, bis das System frei von organischen Bestandteilen ist. Die verbleibenden Oxide werden anschließend zu einem Glas geschmolzen. Auf diese Art und Weise können jedoch nur anorganische, oxidische und glasartige Materialien mit einem engen Eigenschaftsprofil gewonnen werden, deren Herstellung zudem hohe Temperaturen und damit hohe Energiekosten erfordert. Außerdem zeigen diese Systeme nur geringe Quantenausbeuten.

Aufgabe der vorliegenden Erfindung ist es deshalb, fluoreszierende, Erbium-haltige Materialien bereit zu stellen, die über eine hohe Quantenausbeute verfügen, die eine hohe Konzentration an Er³⁺-Ionen aufweisen und die trotz einer hohen Er³⁺-Ionen-Konzentration kein oder nur ein geringes Konzentrationsquenching zeigen. Ferner soll das Herstellungsverfahren einfach, kostengünstig und universell einsetzbar sein. Außerdem sollen die chemischen und physikalischen Eigenschaften der fluoreszierenden Materialien in weiten Bereichen variierbar sein und sie sollen den Erfordernissen des jeweiligen Anwendungsfalles angepaßt werden können. Ferner sollen die fluoreszierenden Materialien zu den unterschiedlichsten Formkörpern verarbeitet werden können, wie z.B. zu Beschichtungen, zu Fasern etc..

Gelöst wird diese Aufgabe durch Materialien, die eine Matrix auf der Basis von Kieselsäurepolykondensaten bzw. Kieselsäureheteropolykondensaten aufweisen, und die in der Matrix Er³⁺-Ionen und gegebenenfalls weitere Zusatzstoffe enthalten. Das Kieselsäure(hetero)polykondensat ist ein hydrolytisches Kondensat oder Vorkondensat einer oder mehrerer hydrolytisch kondensierbarer Verbindungen des Siliciums und gegebenenfalls anderer Elemente aus der Gruppe B, Al, Ge, P, As, Sb, Sn, Pb, der Übergangsmetalle, der Lanthaniden und der Actiniden, und/oder von den oben genannten Verbindungen abgeleiteten Vorkondensaten, wobei die (Vor)Kondensation gegebenenfalls in Anwesenheit eines Katalysators und/oder eines Lösungsmittels, durch Einwirkung von Wasser oder von Feuchtigkeit durchgeführt ist. 5 bis 100 Mol-% der hydrolytisch (vor)kondensierten Verbindungen, auf der Basis monomerer Verbindungen, sind abgeleitet von Silanen der allgemeinen Formel I,

SiRₐX_{b} (I)

in der die Reste R und X gleich oder verschieden sind und folgende Bedeutung haben:
- R =: Alkyl, Alkenyl, Aryl, Alkylaryl oder Arylalkyl, wobei diese Reste durch Sauerstoff- oder Schwefelatome oder -NH-Gruppen unterbrochen sein können und/ oder Spiro-, Oxiran-, cyclische Anhydrid- oder lsocyanatgruppen enthalten können;
- X =: Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
- a =: 1, 2, oder 3,
- b =: 1, 2, oder 3,
mit a+b = 4.

Der Gehalt an Er³⁺-Ionen in den erfindungsgemäßen Materialien liegt zwischen 1 und 50 Gew.-% und die Er³⁺-Ionen sind an nanoskaligen Teilchen fixiert und/oder mit einer oder mehreren organischen Verbindungen komplexiert, die über mindestens eine Elektronenpaar-Donorgruppe verfügen. Die nanoskaligen Teilchen weisen Durchmesser von ≤ 20 nm auf und der Anteil der nanoskaligen Teilchen in den erfindungsgemäßen Materialien liegt zwischen 0 und 40 Vol.-%.

Überraschenderweise wurde festgestellt, daß in der eben beschriebenen Matrix eingelagerte Er³⁺-Ionen fluoreszieren, wenn diese entweder an nanoskaligen Teilchen fixiert und/oder mit einer oder mehreren organischen Verbindungen komplexiert sind, die über mindestens eine Elektronenpaar-Donorgruppe verfügen. Dies ist vorallem deshalb überraschend und war nicht zu erwarten, weil in der eben beschriebenen Matrix eingelagerte Er³⁺-Ionen keine Fluoreszenz zeigen, wenn sie nicht an nanoskaligen Teilchen fixiert oder mit organischen Verbindungen komplexiert sind.

Ferner wurde überraschenderweise festgestellt, daß trotz der enorm hohen Konzentration an Er³⁺-Ionen gegenüber dem Stand der Technik ein Konzentrationsquenching nicht oder nur geringfügig eintritt, so daß die erfindungsgemäßen Materialien hohe Fluoreszenzquantenausbeuten zeigen, die diejenigen des Standes der Technik weit übersteigen. Dies ist wahrscheinlich auf eine verbesserte homogene Verteilung der Er³⁺-Ionen in der Matrix und damit auf eine weitestgehende Blockierung des Konzentrationsquenchings zurückzuführen. Vermutlich wirken die nanoskaligen Teilchen und/oder die Komplexbildner als "Abstandhalter" zwischen den Er³⁺-Ionen, so daß Aggregationen von Er³⁺-Ionen verhindert werden und emitierte Fluoreszenzstrahlung nicht absorbiert werden kann.

Die Alkylreste in der allgemeinen Formel I sind z.B. geradkettige, verzweigte oder cyclische Reste mit z.B. 1 bis 20, insbesondere mit 1 bis 10 Kohlenstoffatomen und vorzugsweise niedere Alkylreste mit 1 bis 6, besonders bevorzugt mit 1 bis 4 Kohlenstoffatomen. Ohne Einschränkung der Allgemeinheit sind spezielle Beispiele Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl.

Die Alkenylreste in der allgemeinen Formel sind z.B. geradkettige, verzweigte oder cyclische Reste mit z.B. 2 bis 20, bevorzugt mit 2 bis 10 Kohlenstoffatomen und vorzugsweise niedere Alkenylreste mit 2 bis 6 Kohlenstoffatomen, wie z.B. Vinyl, Allyl und 2-Butenyl.

Bevorzugte Arylreste in der allgemeinen Formel I sind Phenyl, Biphenyl und Naphthyl.

Die Alkoxy-, Acyloxy-, Alkylamino-, Dialkylamino, Alkylcarbonyl-, Alkoxycarbonyl-, Arylalkyl-, Alkylaryl-, Alkylen- und Alkylenarylenreste in der allgemeinen Formel I leiten sich vorzugsweise von den oben genannten Alkyl- und Arylresten ab. Spezielle Beispiele sind Methoxy, Ethoxy, n- und i-Propoxy, n-, i-, s- und t-Butoxy, Moromethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂.

Unter den Halogenen sind Fluor, Chlor und Brom und insbesondere Chlor bevorzugt.

Für a ≥ 2 bzw. b ≥ 2 können die Reste X und R jeweils die selbe oder eine unte schiedliche Bedeutung haben.

Derartige Silane sind z.B. in der DE 3407087 A1 beschrieben oder können, wie i "Chemie und Technologie der Silicone" (Walter Noll, Verlag Chemie, Weinheirr Bergstraße, 2. Auflage, 1968) dargelegt, gefertigt werden.

Konkrete Beispiele für Silane der allgemeinen Formel I sind: Glycidylpropyltriethoxysilan, Methacrylpropyltriethoxysilan, (C₆H₅)₂Si(OH)₂, CH₃-Si-Cl₃, CH₃-Si-(OC₂H₅)₃, C₂H₅-Si-Cl₃, C₂H₅-Si-(OC₂H₅)₃, CH₂=CH-Si-(OC₂H₅)₃ CH₂=CH-Si-(OC₂H₄OCH₃)₃, (CH₃)₂-Si-Cl₂, (CH₃)₂-Si-(OC₂H₅)₂, (C₂H₅)₃-Si-Cl, CH₂=CH-Si-(OOCCH₃)₃, (C₂H₅)₂-Si-(OC₂H₅)₂, (CH₃)₂(CH₂=CH)-Si-Cl₂, (CH₃)₃-Si-Cl, (t-C₄H₉)(CH₃)₂-Si-Cl, (CH₃O)₃-Si-C₃H₆-NH-C₂H₄-NH-C₂H₄-NH₂, (CH₃O)₃-Si-C₃H₆-SH (CH₃O)₃-Si-C₃H₆-NH-C₂H₄-NH₂, (CH₃O)₃-Si-C₃H₆-Cl, (CH₃)₂(CH₂=CH-CH₂)-Si-Cl, (CH₃O)₃-Si-C₃H₆-O-C(O)-C(CH₃)=CH₂, (C₂H₅O)₃-Si-C₃H₆-NH₂, (C₂H₅O)₃-Si-C₃H₆-CN,

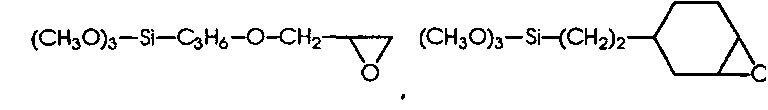

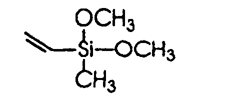

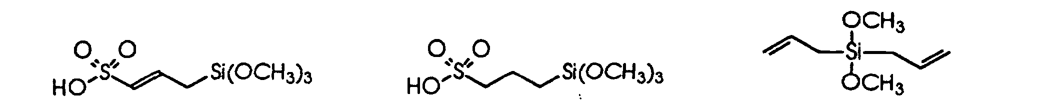

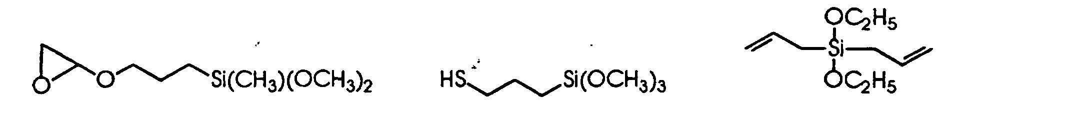

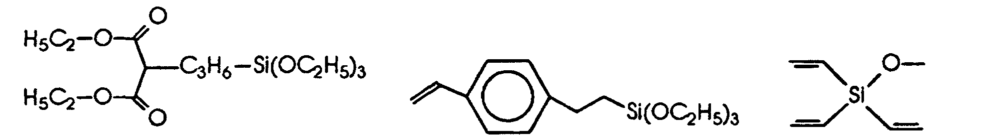

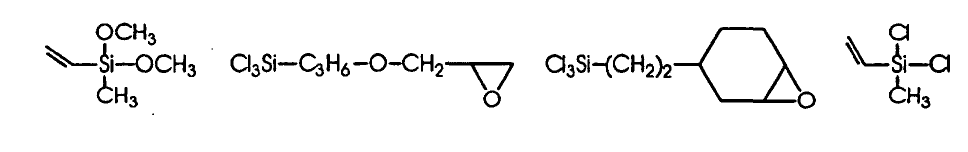

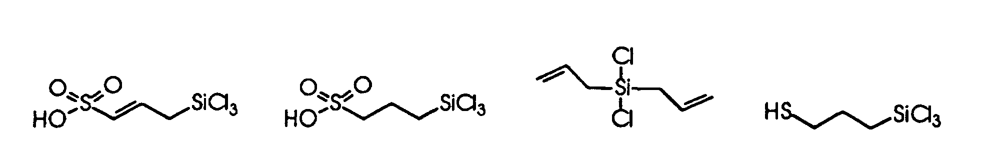

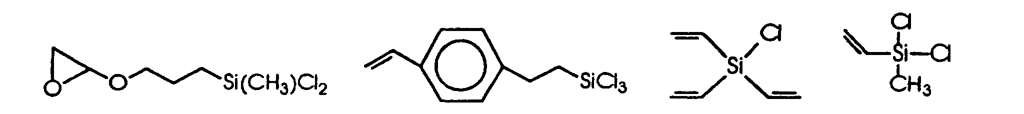

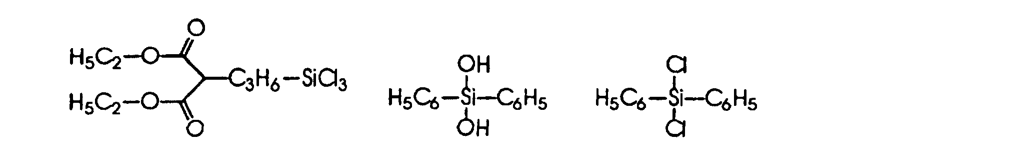

Der Gehalt an Er³⁺-Ionen in den erfindungsgemäßen Materialien kann in weiten Bereichen variiert werden und liegt zwischen 1 und 50 Gew.-%, bevorzugt zwischen 5 und 25 Gew.-%. Überraschenderweise wurde festgestellt, daß bei diesen hohen Konzentrationen an Er³⁺-Ionen kein oder nur geringfügiges Konzentrationsquenching auftritt, so daß die erfindungsgemäßen Materialien über ausgezeichnete Fluoreszenzquantenausbeuten verfügen.

Die nanoskaligen Teilchen weisen Partikelgrößen zwischen 2 und 20 nm, bevorzugt zwischen 5 und 10 nm, auf und sind bevorzugt oxidische Teilchen oder Metallkolloide. Ohne Einschränkung der Allgemeinheit bestehen die nanoskaligen Teilchen z.B. aus LiO2, Nb2O5, Ta2O5, PbO2, ZnO, Si, Ge, Cu, Pb, Ni, Co oder Pt. Bezüglich der Herstellung und bezüglich näherer Informationen wird auf die DE 4133621 A1 verwiesen.

Der Anteil der nanoskaligen Teilchen in den erfindungsgemäßen Materialien kann in weiten Bereichen variiert werden und liegt zwischen 0 und 40 Vol-%. Weisen die erfindungsgemäßen Materialien keine nanoskaligen Teilchen auf, liegt also der Anteil der nanoskaligen Teilchen bei 0 Vol-%, so ist es erforderlich, daß die Er³⁺-Ionen in der beschriebenen Weise komplexiert sind. Sind die Er³⁺-Ionen nicht komplexiert, so ist es bevorzugt, wenn der Anteil der nanoskaligen Teilchen zwischen 1 und 40 besonders bevorzugt zwischen 10 und 25 Vol-% liegt.

Das Partikelverhältnis von nanoskaligen Teilchen zu Er³⁺-Ionen kann in weiten Bereichen variiert werden und liegt bevorzugt zwischen 1:1 und 1:500, besonders bevorzugt zwischen 1:10 und 1:100.

Sind die Er³⁺-Ionen mit organischen Verbindungen komplexiert, die über mindestens eine Elektronenpaar-Donorgruppe verfügen, so sind geeignete Komplexbildner z.B. Stickstoff-haltige Verbindungen wie etwa Amine, Diamine, Aminosäuren, Pyridinderivate, Dipyridyle, Amide, Imide, etc., wobei im Molekül auch mehr als ein Stickstoffatom vorhanden sein kann.

Bevorzugte Komplexbildner sind z.B. Kronenether, wie etwa

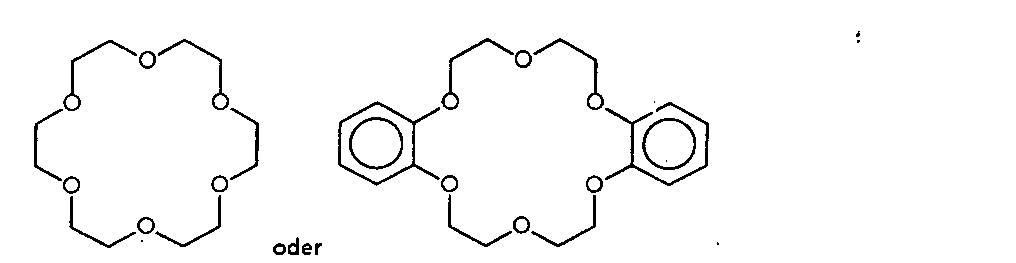

Ferner Thiocyanate oder Isothiocyanate, wie z.B. CH₂=CH-CH₂-S-C=N oder CH₂=CH-CH₂-N=C=S, Porphyrine, wie z.B. 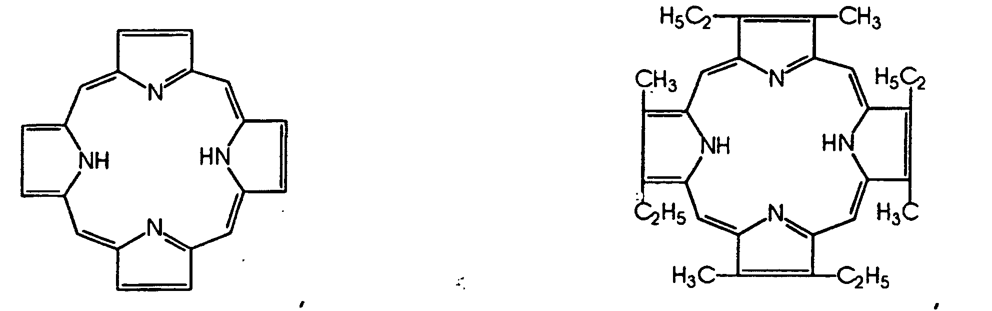 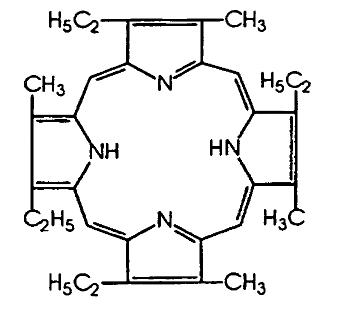 oder Phosphane, wie z.B. Triphenylphosphan.

Ferner sind als Komplexbildner Silane der allgemeinen Formel II bevorzugt,

SiRₐL_{c}X_{b} (II)

in der die Reste R, L und X gleich oder verschieden sind und folgende Bedeutung haben:
- R =: Alkyl, Alkenyl, Aryl, Alkylaryl oder Arylalkyl, wobei diese Reste durch Sauerstoff- oder Schwefelatome oder -NH-Gruppen unterbrochen sein können und/ oder Spiro-, Oxiran-, cyclische Anhydrid- oder Isocyanatgruppen enthalten können
- L =: Alkyl, Alkenyl, Aryl, Alkylaryl oder Arylalkyl mit einer oder mehreren Carboxy-, Sulfonsäure-, Phosphorsäure-, Phosphan- oder primären und/oder sekundären Aminogruppen
- X =: Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
- a =: 0, 1, 2, oder 3,
- b =: 0, 1, 2, oder 3,
- c =: 1, 2, 3 oder 4, mit a+b+c = 4;

Die Alkylreste sind z.B. geradkettige, verzweigte oder cyclische Reste mit z.B. 1 bis 20, insbesondere mit 1 bis 10 Kohlenstoffatomen und vorzugsweise niedere Alkylreste mit 1 bis 6, besonders bevorzugt mit 1 bis 4 Kohlenstoffatomen. Ohne Einschränkung der Allgemeinheit sind spezielle Beispiele Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit z.B. 2 bis 20, bevorzugt mit 2 bis 10 Kohlenstoffatomen und vorzugsweise niedere Alkenylreste mit 2 bis 6 Kohlenstoffatomen, wie z.B. Vinyl, Allyl und 2-Butenyl.

Bevorzugte Arylreste sind Phenyl, Biphenyl und Naphthyl.

Die Alkoxy-, Acyloxy-, Alkylamino-, Dialkylamino-, Alkylcarbonyl-, Alkoxycarbonyl-, Arylalkyl-, Alkylaryl-, Alkylen- und Alkylenarylenreste leiten sich vorzugsweise von den oben genannten Alkyl- und Arylresten ab. Spezielle Beispiele sind Methoxy, Ethoxy, n- und i-Propoxy, n-, i-, s- und t-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂.

Unter den Halogenen sind Fluor, Chlor und Brom und insbesondere Chlor bevorzugt.

Für a ≥ 2 bzw. b ≥ 2 bzw. c ≥ 2 können die Reste X, L und R jeweils die selbe oder eine unterschiedliche Bedeutung haben.

Ohne Einschränkung der Allgemeinheit sind konkrete Beispiele für Silane der allgemeinen Formel II:

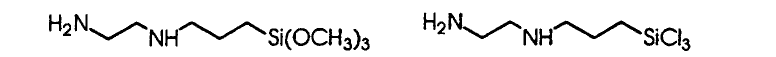

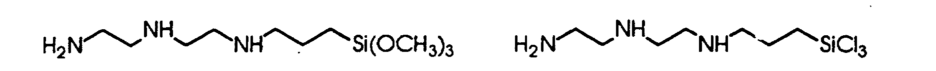

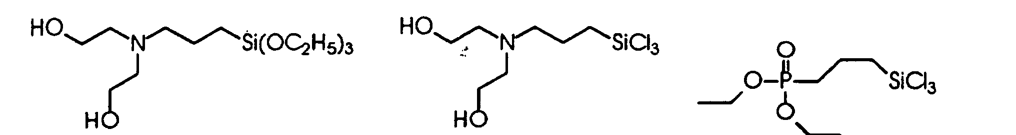

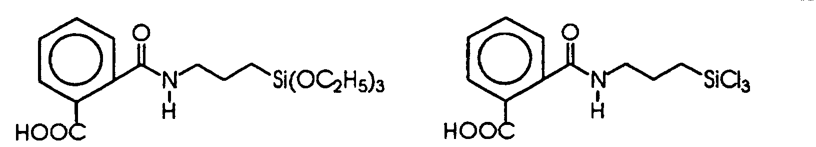

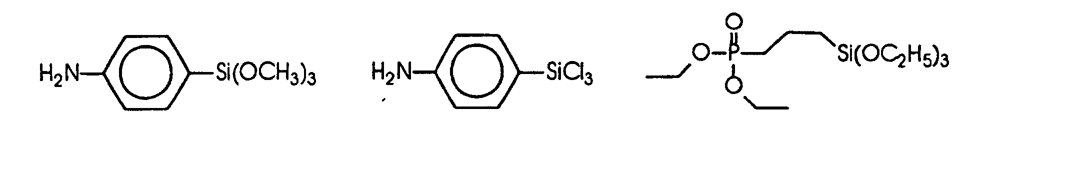

Die erfindungsgemäßen Materialien stellen fluoreszierende anorganisch-organische Hybridkomposite mit Erbiumkonzentrationen von bis zu 50 Gew.-% dar, wobei die Er³⁺-Ionen in eine organisch modifizierte Silicatmatrix kontrolliert eingebaut sind. Die erfindungsgemäßen Materialien sind optisch transparent und zeigen NIR-Fluoreszenzbanden mit Wellenlängenmaxima bei ca. 1500 nm.

Die Matrix der erfindungsgemäßen Materialien stellt ein organisch-anorganisch vernetztes Hybridmaterial dar, dessen Hydrophobie bzw. Hydrophilie durch die organischen bzw. anorganischen Bestandteile gezielt einstellbar und kontrollierbar ist. Ferner können die Wellenleitereigenschaften des erfindungsgemäßen Materials sowie seine Mikrostrukturierung hinsichtlich der Fertigstellung von Testkomponenten für planare Lichtverstärker gezielt kontrolliert werden.

Die erfindungsgemäßen Materialien werden naßchemisch über eine Sol-Gel-Technik, bevorzugt bei Temperaturen unterhalb von 100 °C, hergestellt. Das Herstellungsverfahren beinhaltet zwei unabhängig von einander durchführbare Verfahrensschritte zur Herstellung der Vorstufen, nämlich die Herstellung einer Matrixvorstufe und die Herstellung der an nanoskaligen Teilchen fixierten und/oder mit einer organischen Verbindung komplexierten Er³⁺-Ionen. Anschließend werden die Vorstufen kontrolliert physikalisch miteinander vermischt, das resultierende Sol gegebenenfalls vom Lösungsmittel befreit und gegebenenfalls mit weiteren Zusatzstoffen versehen. Die noch flüssige Solphase wird einem Beschichtungs- oder Formgebungsprozeß unterworfen. Darauf erfolgt gegebenenfalls eine vollständige Kondensation und/oder eine thermisch oder photochemisch induzierte Härtung der nassen Gelfilme oder-körper.

Die Matrixvorstufe stellt ein Kieselsäurepolykondensat oder ein Kieselsäureheteropolykondensat dar und entsteht durch Hydrolyse und Kondensation bzw. durch Teiloder Vorkondensation eines oder mehrerer organisch funktionalisierter Siliciumalkoxide und gegebenenfalls durch Hydrolyse und Kondensation bzw. durch Teil- oder Vorkondensation anderer Elemente aus der Gruppe B, Al, Ge, P, As, Sb, Sn, Pb, der Übergangsmetalle, der Lanthaniden und der Actiniden, und/oder von den oben genannten Verbindungen abgeleiteten Vorkondensaten. Die hydrolytische (Vor-, Teil-) Kondensation wird gegebenenfalls in Anwesenheit eines Katalysators und/oder eines Lösungsmittels, durch Einwirkung von Wasser oder von Feuchtigkeit durchgeführt und gegebenenfalls unter Zugabe weiterer Zusatzstoffe. Auf der Basis monomerer Verbindungen sind 5 bis 100 Mol.-% der hydrolytisch (vor)kondensierten Verbindungen ausgewählt aus Silanen der allgemeinen Formel I.

SiRₐX_{b} (I)

Die Reste und Indices der allgemeinen Formel I sowie spezielle Beispiele wurden bereits bei der Beschreibung der erfindungsgemäßen Materialien näher erläutert

Bevorzugt ist es, wenn mindestens 10 Mol-%, insbesondere mindestens 80 Mol-% und speziell mindestens 90 Mol-%, auf der Basis monomerer Verbindungen, der zu Herstellung der Kieselsäure(hetero)polykondensate herangezogenen Ausgangsmaterialien Siliciumverbindungen sind. Den Kieselsäure(hetero)polykondensaten liegen mindestens 5 Mol-%, z.B. 25 bis 100 Mol-%, insbesondere 50 bis 100 Mol-% und speziell 75 bis 100 Mol-%, jeweils auf der Basis monomerer Verbindungen, an einem oder mehreren der Silane der allgemeinen Formel I zugrunde.

Die Silane der allgemeinen Formel I sind im basischen oder sauren Milieu hydrolysier- und kondensierbar. Dadurch ist es möglich, die Silane der allgemeinen Formel I durch hydrolytische Kondensation in ein anorganisch-organisches Netzwerk einzubauen. Die Silane der allgemeinen Formel I enthalten hydrolysierbare Gruppen X, z.B. Alkoxy-Gruppen, so daß damit ein anorganisches Netzwerk (Si-O-Si-Einheiten) aufgebaut werden kann, während im Rest R enthaltene polymerisierbare oder polyaddierbare Gruppen unter Aufbau eines organischen Netzwerkes polymerisiert bzw. polyaddiert werden können.

Zum Aufbau des anorganischen Netzwerkes werden die Silane der allgemeinen Formel, gegebenenfalls unter Zusatz anderer cokondensierbarer Komponenten hydrolysiert und polykondensiert. Die Polykondensation erfolgt vorzugsweise nach dem Sol-Gel-Verfahren, wie es z.B. in den DE-A1 2758414, 2758415, 3011761, 3826715 und 3835968 beschrieben ist.

Zum Aufbau des organischen Netzwerkes werden die Silane der allgemeinen Formel I, gegebenenfalls unter Zusatz anderer copolymerisierbarer bzw. polyaddierbarer Komponenten polymerisiert bzw. polyaddiert. Die Polymerisation bzw. Polyaddition kann z.B. thermisch, redoxinduziert, kovalent-nucleophil und/oder photochemisch unter Einsatz von Methoden erfolgen, wie sie z.B. in den DE-A1 3143820, 3826715 und 3835968 beschrieben sind.

Bei Anwesenheit von zwei oder mehr polymerisierbaren oder polyaddierbaren Gruppen im Rest R ist die Ausbildung eines dreidimensionalen, organischen Netzwerkes möglich. Über die Kettenlänge des Restes R und über die Anwesenheit weiterer funktioneller Gruppen in dieser Kette können die mechanischen Eigenschaften (z.B. Flexibilität) und die physikalisch-chemischen Eigenschaften (Adsorption, Brechzahl, Haftung etc.) der Poly(hetero)kondensate bzw. der Matrix bzw. der erfindungsgemäßen Materialien beeinflußt werden. Durch die Ausbildung eines anorganischen Netzwerkes können je nach Art und Anzahl der hydrolysierbaren Gruppen (z.B. Alkoxy-Gruppen) silicon- oder glasartige Eigenschaften der Poly(hetero)kondensate bzw. der Matrix bzw. der erfindungsgemäßen Materialien eingestellt werden.

Unter den von Silanen der allgemeinen Formel I verschiedenen, hydrolytisch kondensierbaren Siliciumverbindungen, die gegebenenfalls eingesetzt werden können, sind solche der allgemeinen Formel III besonders bevorzugt,

Rₐ(R"Z')_{b}SiX_{4-(a+b)} (III)

in der die Reste und Indices folgende Bedeutung haben:
- R =: Alkyl, Alkenyl, Aryl, Alkylaryl oder Arylalkyl,
- R'' =: Alkylen oder Alkenylen, wobei diese Reste durch Sauerstoff- oder Schwefelatome oder -NH-Gruppen unterbrochen sein können,
- X =: Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
- Z' =: Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe,
- a =: 0, 1, 2, oder 3,
- b =: 0, 1, 2, oder 3,
mit a+b = 1,2 oder 3.

Für a ≥ 2, b ≥ 2 oder 4-(a+b) ≥ 2 können die Reste R, X und R"Z' gleich oder verschieden sein.

Die Alkylreste sind z.B. geradkettige, verzweigte oder cyclische Reste mit z.B. 1 bis 20, insbesondere mit 1 bis 10 Kohlenstoffatomen und vorzugsweise niedere Alkylreste mit 1 bis 6, besonders bevorzugt mit 1 bis 4 Kohlenstoffatomen. Ohne Einschränkung der Allgemeinheit sind spezielle Beispiele Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit z.B. 2 bis 20, bevorzugt mit 2 bis 10 Kohlenstoffatomen und vorzugsweise niedere Alkenylreste mit 2 bis 6 Kohlenstoffatomen, wie z.B. Vinyl, Allyl und 2-Butenyl.

Bevorzugte Arylreste sind Phenyl, Biphenyl und Naphthyl.

Die Alkoxy-, Acyloxy-, Alkylamino-, Dialkylamino-, Alkylcarbonyl-, Alkoxycarbonyl-, Arylalkyl-, Alkylaryl-, Alkylen- und Alkylenarylenreste leiten sich vorzugsweise von den oben genannten Alkyl- und Arylresten ab. Spezielle Beispiele sind Methoxy, Ethoxy, n- und i-Propoxy, n-, i-, s- und t-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂.

Unter den Halogenen sind Fluor, Chlor und Brom und insbesondere Chlor bevorzugt.

Unter den von Silanen der allgemeinen Formel I verschiedenen, hydrolytisch kondensierbaren Siliciumverbindungen, die gegebenenfalls eingesetzt werden können, sind solche der allgemeinen Formel IV ebenfalls besonders bevorzugt,

{XₙRₖSi[(R²A)ₗ]₄₋₍ₙ₊ₖ₎}ₓB (IV)

in der die Reste und Indices folgende Bedeutung haben:
- A =: O, S, PR', POR', NHC(O)O oder NHC(O)NR',
mit R' = Wasserstoff, Alkyl oder Aryl,
- B =: geradkettiger oder verzweigter organischer Rest, der sich von einer Verbindung B' mit mindestens einer (für l = 1 und A = NHC(O)O oder NHC(O)NR') bzw. mindestens zwei C=C-Doppelbindungen und 5 bis 50 Kohlenstoffatomen ableitet,
mit R'= Wasserstoff, Alkyl oder Aryl,
- R =: Alkyl, Alkenyl, Aryl, Alkylaryl oder Arylalkyl,
- R² =: Alkylen, Arylen oder Alkylenarylen,
- X =: Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
- n =: 1, 2 oder 3,
- k =: 0, 1 oder 2,
- l =: 0 oder 1,
- x =: eine ganze Zahl, deren Maximalwert der Anzahl von Doppelbindungen in der Verbindung B' minus 1 entspricht, bzw. gleich der Anzahl von Doppelbindungen in der Verbindung B' ist, wenn l = 1 und A für NHC(O)O oder NHC(O)NR steht.

Solche Silane sind in der DE 40 11 044 und in der EP 91 105 355 ausführlichst beschrieben.

Die Alkylreste sind z.B. geradkettige, verzweigte oder cyclische Reste mit z.B. 1 bis 20, vorzugsweise mit 1 bis 10 Kohlenstoffatomen, und besonders bevorzugt sind niedere Alkylreste mit 1 bis 6 Kohlenstoffatomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit z.B. 2 bis 20, vorzugsweise mit 2 bis 10 Kohlenstoffatomen, und besonders bevorzugt sind niedere Alkenylreste mit 2 bis 6 Kohlenstoffatomen, wie z.B. Vinyl, Allyl oder 2-Butenyl.

Bevorzugte Arylreste sind Phenyl, Biphenyl und Naphthyl.

Die Alkoxy-, Acyloxy-, Alkylcarbonyl-, Alkoxycarbonyl- und Aminoreste leiten sich vorzugsweise von den oben genannten Alkyl- und Arylresten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, SO₃H und PO₄H₂.

Unter den Halogenen sind Fluor, Chlor und Brom bevorzugt.

Der Rest B leitet sich von einer substituierten oder unsubstituierten Verbindung B' mit mindestens zwei C=C-Doppelbindungen ab, z.B. Vinyl-, Allyl-, Acryl- und/oder Methacrylatgruppen, und 5 bis 50, vorzugsweise 6 bis 30 Kohlenstoffatomen. Vorzugsweise leitet sich B ab, von einer substituierten oder unsubstituierten Verbindung B' mit zwei oder mehreren Acrylat- oder Methacrylatgruppen. Falls die Verbindung B' substituiert ist, können die Substituenten unter den oben genannten Substituenten ausgewählt sein.

Unter den von Silanen der allgemeinen Formel I verschiedenen, hydrolytisch kondensierbaren Siliciumverbindungen, die gegebenenfalls eingesetzt werden können, sind solche der allgemeinen Formel V ebenfalls besonders bevorzugt,

Yₙ Si Xₘ R₄₋₍ₙ₊ₘ₎ (V)

in der die Reste X, Y und R gleich oder verschieden sind und folgende Bedeutung haben:
- R =: Alkyl, Alkenyl, Aryl, Alkylaryl oder Arylalkyl,
- X =: Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
- Y =: ein Substituent, der einen substituierten oder unsubstituierten 1,4,6-Trioxaspiro-[4,4]-nonan-Rest enthält,
- n =: 1, 2 oder 3,
- m =: 1, 2 oder 3, mit n+m ≤ 4.

Diese Spiro-Silane sind über die Reste X hydrolysierbar und über die Reste Y polymerisierbar und sie sind in der DE 4125201 C1 ausführlichst beschrieben.

Die Alkylreste sind z.B. geradkettige, verzweigte oder cyclische Reste mit z.B. 1 bis 20, vorzugsweise mit 1 bis 10 Kohlenstoffatomen, und besonders bevorzugt sind niedere Alkylreste mit 1 bis 6 Kohlenstoffatomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit z.B. 2 bis 20, vorzugsweise mit 2 bis 10 Kohlenstoffatomen, und besonders bevorzugt sind niedere Alkenylreste mit 2 bis 6 Kohlenstoffatomen, wie z.B. Vinyl, Allyl oder 2-Butenyl.

Bevorzugte Arylreste sind Phenyl, Biphenyl und Naphthyl.

Die Alkoxy-, Acyloxy-, Alkylcarbonyl-, Alkoxycarbonyl- und Aminoreste leiten sich vorzugsweise von den oben genannten Alkyl- und Arylresten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, SO₃H und PO₄H₂.

Unter den Halogenen sind Fluor, Chlor und Brom bevorzugt.

Unter den gegebenenfalls eingesetzten hydrolysierbaren Aluminiumverbindungen sind diejenigen besonders bevorzugt, die die allgemeine Formel AlR°₃ aufweisen, in der die Reste R°, die gleich oder verschieden sein können, ausgewählt sind aus Halogen, Alkoxy, Alkoxycarbonyl und Hydroxy. Hinsichtlich der näheren (bevorzugten) Definitionen dieser Reste kann auf die Ausführungen im Zusammenhang mit den geeigneten hydrolysierbaren Siliciumverbindungen verwiesen werden. Die soeben genannten Gruppen können auch ganz oder teilweise durch Chelatliganden (z.B. Acetylaceton oder Acetessigsäureester, Essigsäure) ersetzt sein.

Besonders bevorzugte Aluminiumverbindungen sind Aluminiumalkoxide und -halogenide. In diesem Zusammenhang können als konkrete Beispiele genannt werden
Al(OCH₃)₃, Al(OC₂H₅)₃, Al(O-n-C₃H₇)₃, Al(O-i-C₃H₇)₃, Al(OC₄H₉)₃, Al(O-i-C₄H₉)₃, Al(Os-C₄H₉)₃, AlCl₃, AlCl(OH)₂.

Bei Raumtemperatur flüssige Verbindungen, wie z.B. Aluminium-sek-butylat und Aluminium-isopropylat, werden besonders bevorzugt.

Geeignete hydrolysierbare Titan- oder Zirkoniumverbindungen, die gegebenenfalls eingesetzt werden können, sind solche der allgemeinen Formel MX_{y}R_{z}, in der M Ti oder Zr bedeutet, y eine ganze Zahl von 1 bis 4 ist, insbesondere 2 bis 4, z für 0, 1, 2 oder 3 steht, vorzugsweise für 0, 1 oder 2, und X und R wie im Falle der allgemeinen Formel I definiert sind. Dies gilt auch für die bevorzugten Bedeutungen. Besonders bevorzugt handelt es sich bei den Verbindungen um solche, in denen y gleich 4 ist.

Wie im Falle der obigen Al-Verbindungen können auch komplexierte Ti- oder Zr-Verbindungen eingesetzt werden. Zusätzliche bevorzugte Komplexbildner sind hier Acrylsäure und Methacrylsäure, wobei Silane, die Acryl- bzw. Methacryl-Gruppen aufweisen, ebenfalls zur Komplexierung verwendet werden können. In diesem Fall besteht der große Vorteil darin, daß zur Komplexierung von Ti- und/oder Zr-Verbindungen keine zusätzlichen Komplexierungsmittel eingesetzt werden müssen.

Konkrete Beispiele für einsetzbare Zr- und Ti-Verbindungen sind die folgenden:
TiCl₄, Ti(OC₂H₅)₄, Ti(OC₃H₇)₄, Ti(O-i-C₃H₇)₄, Ti(OC₄H₉)₄, Ti(2-ethylhexoxy)₄, ZrCl₄, Zr(OC₂H₅)₄, Zr(OC₃H₇)₄, Zr(O-i-C₃H₇)₄, Zr(OC₄H₉)₄, Zr(2-ethylhexoxy)₄, ZrOCl₂

Weitere hydrolysierbare Verbindungen, die zur Herstellung der Polyheterokondensate eingesetzt werden können, sind z.B. Bortrihalogenide und Borsäureester, wie z.B. BCl₃, B(OCH₃)₃ und B(OC₂H₅)₃, Zinntetrahalogenide und Zinntetraalkoxide, wie z.B. SnCl₄ und Sn(OCH₃)₄, und Vanadylverbindungen, wie z.B. VOCl₃ und VO(OCH₃)₃.

Wie bereits erwähnt, kann die Herstellung der Poly(hetero)kondensate in auf diesem Gebiet üblicher Art und Weise erfolgen. Werden praktisch ausschließlich Siliciumverbindungen eingesetzt, kann die hydrolytische Kondensation in den meisten Fällen dadurch erfolgen, daß man den zu hydrolysierenden Siliciumverbindungen, die entweder als solche oder gelöst in einem geeigneten Lösungsmittel vorliegen, das erforderliche Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt.

Bei Anwesenheit reaktiver Verbindungen von Al, Ti oder Zr empfiehlt sich in der Regel eine stufenweise Zugabe des Wassers. Unabhängig von der Reaktivität der anwesenden Verbindungen erfolgt die Hydrolyse in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingesetzten Ausgangsverbindungen ab. So kann man z.B. die gelösten Ausgangsverbindungen langsam zu einem Überschuß an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionssystem einzutragen. Als besonders geeignet hat sich in vielen Fällen die Eintragung der Wassermenge in das Reaktionsgemisch mit Hilfe von feuchtigkeitsbeladenen Adsorbentien, z.B. von Molekularsieben, und von wasserhaltigen, organischen Lösungsmitteln, z.B. von 80 %-igem Ethanol, erwiesen. Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, insbesondere Essigsäureethylester, Dimethylformamid, Amine, insbesondere Triethylamin, und deren Gemische in Frage.

Werden Spiro-Silane zur Herstellung der Poly(hetero)kondensate eingesetzt, so wird die Hydrolyse bevorzugt in einem bzgl. der Spiro-Silane basischen Milieu durchgeführt. Dies wird entweder durch ein basisches Lösungsmittel, wie z.B. durch Triethylamin, erzeugt, oder durch Zugabe von basischen Hydrolyse- und Kondensationskatalysatoren, wie z.B. von NH₃, NaOH, KOH, Methylimidazol, etc.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Um insbesondere bei Verwendung von von Silicium-Verbindungen verschiedenen hydrolysierbaren Verbindungen Ausfällungen während der Hydrolyse und der Polykondensation so weit wie möglich zu vermeiden, kann die Wasserzugabe in mehreren Stufen, z.B. in drei Stufen, durchgeführt werden. Dabei kann in der ersten Stufe z.B. ein Zehntel bis ein Zwanzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich nach den jeweiligen Ausgangskomponenten und deren Mengenanteilen, dem gegebenenfalls verwendeten Katalysator, der Reaktionstemperatur, etc. Im allgemeinen erfolgt die Polykondensation bei Normaldruck, sie kann jedoch auch bei erhöhtem oder bei verringertem Druck durchgeführt werden.

Zur Herstellung der Matrixvorstufe werden bevorzugt solche Silane eingesetzt, deren Rest R keine OH-Gruppen und wenig C-H-Bindungen enthält. Besonders bevorzugt ist es, wenn der Rest R F-haltig ist mit einem hohen Verhältnis von C-F : C-H-Bindungen.

Zur Herstellung einer Lösung komplexierter Er³⁺-Ionen werden eine oder mehrere Er³⁺-Verbindungen in einem organischen Lösungsmittel mit 1 bis 50 Mol, bezogen auf ein Mol Er³⁺-Verbindung, einer oder mehrerer organischen Verbindungen komplexiert, die über mindestens eine Elektronenpaar-Donorgruppe verfügen. Geeignete Komplexierungsmittel wurden bereits bei der Beschreibung der erfindungsgemäßen Materialien näher erläutert. Werden zur Komplexierung der Er³⁺-Ionen Silane der allgemeinen Formel II eingesetzt, so bieten diese den großen Vorteil, daß über den Rest X der Erbiumkomplex in das anorganische Netzwerk der Matrix eingebaut werden kann und über den Rest R in das organische Netzwerk, wenn dieser über polymerisierbare und/oder polyaddierbare Gruppen verfügt. Dadurch sind die Erbiumkomplexe über kovalente Bindungen fest in der Matrix fixiert.

Zur Fixierung der Er³⁺-Ionen oder der komplexierten Er³⁺-Ionen an nanoskalige Teilchen und zur Herstellung einer kolloidalen Lösung von an nanoskaligen Teilchen fixierten Er³⁺-Ionen und/oder komplexierten Er³⁺-Ionen wird entweder eine Suspension nanoskaliger Teilchen mit einer Er³⁺-Salz-Lösung oder mit einer Lösung komplexierter Er³⁺-Ionen imprägniert, oder es werden nanoskalige Teilchen in Gegenwart einer Er³⁺-Salz-Lösung oder in Gegenwart der Lösung komplexierter Er³⁺-Ionen als Kolloid gefällt, wobei das Partikelverhältnis von nanoskaligem Teilchen zu (komplexierten) Er³⁺-Ionen zwischen 1:1 und 1:500 liegt.

Es gibt also im Prinzip zwei Möglichkeiten, kolloidale Lösungen von Er³⁺-Ionen und/oder von komplexierten Er³⁺-Ionen herzustellen, die an nanoskaligen Teilchen fixiert sind.

In einer ersten Variante wird aus nanoskaligen Teilchen eine Partikelsuspension gefertigt und diese mit einer Lösung von Er³⁺-Ionen und/oder mit einer Lösung von komplexierten Er³⁺-Ionen vermischt, getränkt oder imprägniert. Dabei ist Art und Menge des Lösungsmittels so gewählt, daß eine kolloidale Lösung resultiert. Geeignete nanoskalige Teilchen wurden bereits bei der Beschreibung der erfindungsgemäßen Materialien näher erläutert.

In einer zweiten Variante werden nanoskalige Teilchen in Gegenwart von Er³⁺-Ionen oder von komplexierten Er³⁺-Ionen gefällt. Sollen z.B. nanoskalige Teilchen aus ZnO resultieren, so fertigt man aus einem Zink- und Erbiumacetatgemisch ein Heteroalkoxid, welches einer hydrolytischen Kondensation unterworfen wird, die zu nanoskaligen, partikelhaltigen ZnO-Kolloiden mit atomar verteilten Er³⁺-Ionen führt.

Ohne Einschränkung der Allgemeinheit sind geeignete Er³⁺-Verbindungen, die zur Herstellung von Lösungen (komplexierter) Er³⁺-Ionen eingesetzt werden können, Erbiumalkoxide, Erbiumcarboxylate, wie z.B. Erbiumacetat, Erbiumsalze, wie z.B. ErCl₃ oder Er(NO₃)₃. Bevorzugt werden ionische, dissoziierbare Er³⁺-Verbindungen eingesetzt. Es versteht sich von selbst, daß die Anionen der eingesetzten Er³⁺-Salze im Falle einer Komplexierung der Er³⁺-Ionen diese Kemplexierung nicht behindern dürfen.

Geeignete Lösungsmittel zur Herstellung von Lösungen (komplexierter) Er³⁺-Ionen sind ohne Einschränkung der Allgemeinheit primäre, sekundäre, tertiäre, 1- oder 2-wertige Alkohole, Ketone, Ester, aromatische oder aliphatische Kohlenwasserstoffe, die auch halogeniert sein dürfen. Bevorzugt ist es, wenn der Siedepunkt des Lösungsmittels, bei normalen oder bei reduziertem Druck, unterhalb 150 °C liegt. Ferner sind Alkohole mit 1 bis 6 Kohlenstoffatomen besonders bevorzugt. Es versteht sich von selbst, daß das Lösungsmittel so zu wählen ist, daß die (komplexierten) Er³⁺-Verbindungen und, falls eingesetzt, die Komplexbildner in Lösung gehen. Ohne Einschränkung der Allgemeinheit sind konkrete Beispiele für geeignete Lösungsmittel Toluol, Acetonitril, Ethanol oder Hexamethyldisiloxan.

Die Matrixvorstufe und die Lösung der Er³⁺-Ionen oder die kolloidale Lösung der an nanoskaligen Teilchen fixierten (komplexierten) Er³⁺-Ionen werden kontrolliert physikalisch miteinander vermischt. Das resultierende Sol wird gegebenenfalls mit weiteren Zusatzstoffen versehen und gegebenenfalls vom Lösungsmittel befreit, und die noch flüssige Solphase wird einem Beschichtungs- oder Formgebungsprozeß unterworfen.

Als Zusatzstoffe können dem Polykondensat eine oder mehrere radikalisch und/oder ionisch polymerisierbare Komponenten zugesetzt werden, sowie die dazu notwendigen Starter und Beschleuniger. Ferner können Weichmacher und andere Verarbeitungshilfsstoffe in der Matrix enthalten sein.

Enthalten die Matrix und/oder die Erbiumkomplexe und/oder die Zusatzstoffe polymerisierbare und/oder polyaddierbare Gruppen, wie z.B. C=C-Doppelbindungen (z.B. Acrylate, Methacrylate, Styrole, Vinylgruppen), Oxiran-, Isocyanat oder Spirogruppen oder cyclische Anhydride, so kann der nasse Gelfilm oder -körper einer redoxinduzierten oder thermisch, kovalent-nucleophil oder photochemisch induzierten Härtung unterzogen werden, gegebenenfalls unter Zusatz geeigneter Initiatoren. Dabei wird durch Polymerisation bzw. Polyaddition das organische Netzwerk aufgebaut.

Das erfindungsgemäße Verfahren stellt einen naßchemischen Syntheseweg zur Herstellung NIR-fluoreszierender Er-haltiger Hybridmaterialien dar. Durch die Verwendung einer Matrix auf der Basis einer organisch-modifizierter Keramik können die hydrophilen/hydrophoben Eigenschaften der Matrix und damit der erfindungsgmäßen Materialien gezielt eingestellt werden. Ferner können die Wellenleitereigenschaften der erfindungsgemäßen Materialien sowie die Mikrostrukturierung hinsichtlich der Fertigstellung von Testkomponenten für planare Lichtverstärker gezielt eingestellt werden.

Ferner wurde überraschenderweise festgestellt, daß die Anwesenheit von nanoskaligen Teilchen als Er-Träger die Fluoreszenzquantenausbeute der Er³⁺-Ionen im Komposit um einen Faktor von bis zu 6 erhöht. Dies ist wahrscheinlich auf eine verbesserte homogene Verteilung der Er³⁺-Ionen und somit auf eine weitestgehende Blockierung des Konzentrationsquenchings gegenüber den bisher bekannten Materialien zurückzuführen. Die höchsten Quantenausbeuten der erfindungsgemäßen Materialien werden erhalten, wenn die Er³⁺-Ionen komplexiert und an nanoskaligen Teilchen fixiert sind.

Die erfindungsgemäßen Materialien können in der Sensorik, in optischen Schaltungen und Displays, als Photoleiter, in der Telekommunikation und ganz allgemein für photo- und elektroaktive Anwendungen eingesetzt werden. Die erfindungsgemäßen Materialien sind insbesondere deswegen für Anwendungen in der Telekommunikation von Interesse, weil die Fluoreszenzwellenlänge der erfindungsgemäßen Materialien im Bereich der Kommunikationsfrequenz liegt. Werden Si- oder Ge-Teilchen als nanoskalige Teilchen verwendet, so ergeben sich aus der Tatsache, daß Si und Ge selbst fluoreszieren, erhebliche Freiräume für die Einkopplung von Energie in die erfindungsgemäßen fluoreszierenden Materialien.

Anhand eines Ausführungsbeispieles wird die Herstellung der erfindunsgemäßen Materialien näher erläutert.

Im ersten Schritt wird eine methanolische 0.01 bis 0.3 molare Erbiumacetatlösung vorgelegt und eine eine Ethylendiamin-Gruppe tragende Siliciumtrimethoxyverbindung unter Rühren tropfenweise hinzugefügt.

Die resultierende Er-Komplex-Lösung wird unter Rühren an der Luft und bei Raumtemperatur in ein 0.1 bis 1 molares partikelhaltiges ZnO-Sol physikalisch eingebracht. Diese ZnO-Sole werden durch Hydrolyse einer metallorganischen Verbindung mittels 0.9 Moläquivalenten an Tetramethylammoniumhydroxid erhalten. Die metallorganische Zn-Vorstufe wird aus einer ethanolischen Zinkacetat-Dihydrat-Lösung synthetisiert (3.25 Stunden unter Rückfluß). Die Partikelgröße der vorgelegten ZnO-Teilchen liegt zwischen 3 und 10 nm. Das resultierende ZnO-Partikel/Erbium-Verhältnis variiert zwischen 1/1 und 1/500.

Im weiteren Schritt wird die optisch transparente ZnO-Partikel/Er-Komplex-Lösung bei Raumtemperatur und unter Rühren zu einem Matrixvorhydrolysat tropfenweise hinzugefügt. Dieses Matrixvorhydrolysat setzt sich zusammen aus einem vorhydrolysierten Gemisch aus GLYMO, MEMO, TEOS und Diphenylsilanol. Diesem Beschichtungssol kann optionsweise ein thermischer oder photochemischer Polymerisationsstarter zugefügt werden.

Die resultierenden Beschichtungssole sind optisch transparent und werden gegebenenfalls am Rotationsverdampfer vom Lösungsmittel befreit (30 °C, 30 Torr, Wasserstrahlvakuum, anschließend Hochvakuum). Zum Schluß erfolgt eine Formgebung durch Eingießen in Polycarbonatschälchen geeigneter Form. Der Härtungsprozeß findet unter Normaldruck und Atmosphäre in einem staubfreien Temperofen für die Dauer von 10 Tagen. Dabei wird die Temperatur kontinuierlich von 35 °C auf 95 °C erhöht. Es resultieren rißfreie, optisch transparente Formkörper oder Schichten einer schwach oder stark rosaroten Farbe.

## Patentansprüche

1. Fluoreszierende Materialien mit einer Matrix auf der Basis von Kieselsäure(hetero)polykondensaten, mit darin enthaltenen Er³⁺-Ionen und mit gegebenenfalls weiteren Zusatzstoffen mit folgenden Merkmalen:
• Das Kieselsäure(hetero)polykondensat ist ein hydrolytisches (Vor)Kondensat einer oder mehrerer hydrolytisch kondensierbarer Verbindungen des Siliciums und gegebenenfalls anderer Elemente aus der Gruppe B, Al, Ge, P, As, Sb, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels, durch Einwirkung von Wasser oder von Feuchtigkeit;
• 5 bis 100 Mol-% der hydrolytisch (vor)kondensierten Verbindungen, auf der Basis monomerer Verbindungen, sind abgeleitet von Silanen der allgemeinen Formel I,
SiRₐX_{b} (I)
in der die Reste R und X gleich oder verschieden sind und folgende Bedeutung haben:
R = Alkyl, Alkenyl, Aryl, Alkylaryl oder Arylalkyl, wobei diese Reste durch Sauerstoff- oder Schwefelatome oder -NH-Gruppen unterbrochen sein können und/oder Spiro-, Oxiran-, cyclische Anhydrid- oder Isocyanat-Gruppen enthalten können
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
a = 1, 2, oder 3,
b = 1, 2, oder 3,
mit a+b = 4;
die Er³⁺-Ionen sind an nanoskaligen Teilchen fixiert und/oder mit einer oder mehreren organischen Verbindungen komplexiert, die über mindestens eine Elektronenpaar-Donorgruppe verfügen;
• die nanoskaligen Teilchen weisen Durchmesser von s 20 nm auf;
• der Anteil der nanoskaligen Teilchen in den fluoreszierenden Materialien liegt zwischen 0 und 40 Vol.-%;
• der Gehalt an Er³⁺-Ionen in den fluoreszierenden Materialien liegt zwischen 1 und 50 Gew.-%.

2. Fluoreszierende Materialien nach Anspruch 1, **dadurch gekennzeichnet, daß** das molare Verhältnis von Er³⁺-Ionen zu Komplexbildner zwischen 1:1 und 1:50 liegt.

3. Fluoreszierende Materialien nach Anspruch 1 oder 2, **dadurch gekennzeichnet, daß** das Partikelverhältnis von nanoskaligem Teilchen zu Er³⁺-Ionen zwischen 1:1 und 1:500 liegt.

4. Fluoreszierende Materialien nach einem oder mehreren der Ansprüche 1 bis 3, **dadurch gekennzeichnet, daß** der Komplexbildner für die Er³⁺-Ionen ein Kronenether, ein Thiocyanat, ein Porphyrin, ein Phosphan, eine Verbindung mit einem oder mehreren Stickstoffatomen oder ein Silan der allgemeinen Formel II ist,
SiRₐL_{c}X_{b} (II)
in der die Reste R, L und X gleich oder verschieden sind und folgende Bedeutung haben:
R = Alkyl, Alkenyl, Aryl, Alkylaryl oder Arylalkyl, wobei diese Reste durch Sauerstoff- oder Schwefelatome oder -NH-Gruppen unterbrochen sein können und/oder Spiro-, Oxiran-, cyclische Anhydrid- oder Isocyanat-Gruppen enthalten können
L = Alkyl, Alkenyl, Aryl, Alkylaryl oder Arylalkyl mit einer oder mehreren Carboxy-, Sulfonsäure-, Phosphorsäure-, Phosphan- oder primären und/ oder sekundären Amino-Gruppen
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
a = 0, 1, 2, oder 3,
b = 0, 1, 2, oder 3,
c = 1, 2, 3 oder 4,
mit a+b+c = 4;

5. Fluoreszierende Materialien nach einem oder mehreren der Ansprüche 1 bis 4, **dadurch gekennzeichnet, daß** die nanoskaligen Teilchen oxidische Teilchen oder Metallkolloide sind.

6. Fluoreszierende Materialien nach einem oder mehreren der Ansprüche 1 bis 5, **dadurch gekennzeichnet, daß** die Matrix als weitere hydrolytisch (vor)kondensierte Verbindungen des Siliciums eine oder mehrere Verbindungen enthält, die sich von Siliciumverbindungen der allgemeinen Formel III ableiten,
Rₐ(R"Z')_{b}SiX_{4-(a+b)} (III)
in der die Reste und Indices folgende Bedeutung haben:
R = Alkyl, Alkenyl, Aryl, Alkylaryl oder Arylalkyl,
R'' = Alkylen oder Alkenylen, wobei diese Reste durch Sauerstoff- oder Schwefelatome oder -NH-Gruppen unterbrochen sein können,
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinyl-Gruppe,
a = 0, 1, 2, oder 3,
b = 0, 1, 2, oder 3,
mit a+b = 1, 2 oder 3.

7. Fluoreszierende Materialien nach einem oder mehreren der Ansprüche 1 bis 6, **dadurch gekennzeichnet, daß** die Matrix als weitere hydrolytisch (vor)kondensierte Verbindungen des Siliciums eine oder mehrere Verbindungen enthält, die sich von Siliciumverbindungen der allgemeinen Formel IV ableiten,
{XₙRₖSi[(R²A)ₗ]₄₋₍ₙ₊ₖ₎}ₓB (IV)
in der die Reste und Indices folgende Bedeutung haben:
A = O, S, PR', POR', NHC(O)O oder NHC(O)NR',
mit R' = Wasserstoff, Alkyl oder Aryl,
B = geradkettiger oder verzweigter organischer Rest, der sich von einer Verbindung B' mit mindestens einer (für I = 1 und A = NHC(O)O oder NHC(O)NR') bzw. mindestens zwei C=C-Doppelbindungen und 5 bis 50 Kohlenstoffatomen ableitet,
mit R'= Wasserstoff, Alkyl oder Aryl,
R = Alkyl, Alkenyl, Aryl, Alkylaryl oder Arylalkyl,
R² = Alkylen, Arylen oder Alkylenarylen,
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
n = 1, 2 oder 3,
k = 0, 1 oder 2,
l = 0 oder 1,
x = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn l = 1 und A für NHC(O)O oder NHC(O)NR steht.

8. Fluoreszierende Materialien nach einem oder mehreren der Ansprüche 1 bis 7, **dadurch gekennzeichnet, daß** die Matrix als weitere hydrolytisch (vor)kondensierte Verbindungen des Siliciums eine oder mehrere Verbindungen enthält, die sich von Siliciumverbindungen der allgemeinen Formel V ableiten,
Yₙ Si Xₘ R₄₋₍ₙ₊ₘ₎ (V)
in der die Reste X, Y und R gleich oder verschieden sind und folgende Bedeutung haben:
R = Alkyl, Alkenyl, Aryl, Alkylaryl oder Arylalkyl,
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
Y = ein Substituent, der einen substituierten oder unsubstituierten 1,4,6-Trioxaspiro-[4,4]-nonan-Rest enthält,
n = 1, 2 oder 3,
m = 1, 2 oder 3, mit n+m ≤ 4.

9. Fluoreszierende Materialien nach einem oder mehreren der Ansprüche 1 bis 8, **dadurch gekennzeichnet, daß** die Matrix als weitere hydrolytisch (vor)kondensierte Verbindungen eine oder mehrere Verbindungen enthält, die sich von Aluminium-, Zirkonium- oder Titanverbindungen der allgemeinen Formel
AIR°₃ oder M X_{y} R_{z}
ableiten, in der M Titan oder Zirkonium bedeutet, die Reste R, R° und X gleich oder verschieden sind, R° Halogen, Hydroxy, Alkoxy oder Acyloxy darstellt, y eine ganze Zahl von 1 bis 4 ist, insbesondere 2 bis 4, z für 0, 1, 2 oder 3 steht, vorzugsweise für 0, 1 oder 2, und X und R wie im Falle der allgemeinen Formel I definiert sind.

10. Fluoreszierende Materialien nach einem oder mehreren der Ansprüche 1 bis 9, **dadurch gekennzeichnet, daß** die Matrix organische Polymere und/oder polymerisierbare organische Monomere und/oder Oligomere enthält.

11. Verfahren zur Herstellung von fluoreszierenden Materialien nach einem oder mehreren der Ansprüche 1 bis 10 mit folgenden Merkmalen:
• Man fertigt eine Matrixvorstufe durch hydrolytische (Vor)Kondensation einer oder mehrerer hydrolytisch kondensierbarer Verbindungen des Siliciums und gegebenenfalls anderer Elemente aus der Gruppe B, Al, Ge, P, As, Sb, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels, durch Einwirkung von Wasser oder von Feuchtigkeit, und gegebenenfalls durch Zugabe weiterer Zusatzstoffe;
• 5 bis 100 Mol-% der hydrolytisch (vor)kondensierten Verbindungen, auf der Basis monomerer Verbindungen, sind ausgewählt aus Silanen der allgemeinen Formel I,
SiRₐX_{b} (I)
in der die Reste R und X gleich oder verschieden sind und folgende Bedeutung haben:
R = Alkyl, Alkenyl, Aryl, Alkylaryl oder Arylalkyl, wobei diese Reste durch Sauerstoff- oder Schwefelatome oder -NH-Gruppen unterbrochen sein können und/oder Spiro-, Oxiran-, cyclische Anhydrid- oder Isocyanat-Gruppen enthalten können
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
a = 1, 2, oder 3,
b = 1, 2, oder 3,
mit a+b = 4;
• zur Herstellung einer Lösung komplexierter Er³⁺-Ionen werden eines oder mehrere Er³⁺-Salze in einem organischen Lösungsmittel mit 1 bis 50 Mol, bezogen auf ein Mol Er³⁺-Salz, einer oder mehrerer organischen Verbindungen komplexiert, die über mindestens eine Elektronenpaar-Donorgruppe verfügen;
• zur Fixierung der (komplexierten) Er³⁺-Ionen an nanoskalige Teilchen und zur Herstellung einer kolloidalen Lösung von an nanoskaligen Teilchen fixierten (komplexierten) Er³⁺-Ionen wird entweder eine Suspension nanoskaliger Teilchen mit einer Er³⁺-Salz-Lösung oder mit der Lösung komplexierter Er³⁺-Ionen imprägniert, oder es werden nanoskalige Teilchen in Gegenwart einer Er³⁺-Salz-Lösung oder in Gegenwart der Lösung komplexierter Er³⁺-Ionen als Kolloid gefällt, wobei das Partikelverhältnis von nanoskaligem Teilchen zu (komplexierten) Er³⁺-Ionen zwischen 1:1 und 1:500 liegt;
• die Matrixvorstufe und die Lösung der komplexierten Er³⁺-Ionen oder die kolloidalen Lösung von an nanoskaligen Teilchen fixierten (komplexierten) Er³⁺-Ionen werden mit einander vermischt und gegebenenfalls mit weiteren Zusatzstoffen versehen;
• die resultierende Mischung wird gegebenenfalls ganz oder teilweise vom Lösungsmittel befreit und der Formgebung unterworfen;
• gegebenenfalls wird die resultierende Masse vollständig polykondensiert und/ oder einer thermisch und/oder photochemisch induzierten Härtung unterworfen.

12. Verfahren nach Anspruch 11, **dadurch gekennzeichnet, daß** als Komplexbildner für die Er³⁺-Ionen ein Kronenether, ein Rhodanid, ein Porphyrin, ein Phosphan, eine Verbindung mit einem oder mehreren Stickstoffatomen oder ein Silan der allgemeinen Formel II eingesetzt wird,
SiRₐL_{c}X_{b} (II)
in der die Reste R, L und X gleich oder verschieden sind und folgende Bedeutung haben:
R = Alkyl, Alkenyl, Aryl, Alkylaryl oder Arylalkyl, wobei diese Reste durch Sauerstoff- oder Schwefelatome oder -NH-Gruppen unterbrochen sein können und/oder Spiro-, Oxiran-, cyclische Anhydrid- oder IsocyanatGruppen enthalten können
L = Alkyl, Alkenyl, Aryl, Alkylaryl oder Arylalkyl mit einer oder mehreren Carboxy-, Sulfonsäure-, Phosphorsäure-, Phosphan- oder primären und/ oder sekundären Amino-Gruppen
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
a = 0, 1, 2, oder 3,
b = 0, 1, 2, oder 3,
c = 1, 2, 3 oder 4,
mit a+b+c = 4;

13. Verfahren nach Anspruch 11 oder 12, **dadurch gekennzeichnet, daß** man als nanoskalige Teilchen oxidische Teilchen oder Metallkolloide einsetzt.

14. Verfahren nach einem oder mehreren der Ansprüche 11 bis 13, **dadurch gekennzeichnet, daß** man als weitere hydrolytisch kondensierbare Verbindungen des Siliciums eine oder mehrere Verbindungen der allgemeinen Formel III, gegebenenfalls in vorkondensierter Form, einsetzt,
Rₐ(R"Z')_{b}SiX_{4-(a+b)} (III)
in der die Reste und Indices folgende Bedeutung haben:
R = Alkyl, Alkenyl, Aryl, Alkylaryl oder Arylalkyl,
R'' = Alkylen oder Alkenylen, wobei diese Reste durch Sauerstoff- oder Schwefelatome oder -NH-Gruppen unterbrochen sein können,
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinyl-Gruppe,
a = 0, 1, 2, oder 3,
b = 0, 1, 2, oder 3,
mit a+b = 1,2 oder 3.

15. Verfahren nach einem oder mehreren der Ansprüche 11 bis 14, **dadurch gekennzeichnet, daß** man als weitere hydrolytisch kondensierbare Verbindungen des Siliciums eine oder mehrere Verbindungen der allgemeinen Formel IV, gegebenenfalls in vorkondensierter Form, einsetzt,
{XₙRₖSi[(R²A)ₗ]₄₋₍ₙ₊ₖ₎}ₓB (IV)
in der die Reste und Indices folgende Bedeutung haben:
A = O, S, PR', POR', NHC(O)O oder NHC(O)NR', mit R' = Wasserstoff, Alkyl oder Aryl,
B = geradkettiger oder verzweigter organischer Rest, der sich von einer Verbindung B' mit mindestens einer (für l = 1 und A = NHC(O)O oder NHC(O)NR') bzw. mindestens zwei C=C-Doppelbindungen und 5 bis 50 Kohlenstoffatomen ableitet, mit R'= Wasserstoff, Alkyl oder Aryl,
R = Alkyl, Alkenyl, Aryl, Alkylaryl oder Arylalkyl,
R² = Alkylen, Arylen oder Alkylenarylen,
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
n = 1, 2 oder 3,
k = 0, 1 oder 2,
l = 0 oder 1,
x = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn l = 1 und A für NHC(O)O oder NHC(O)NR steht.

16. Verfahren nach einem oder mehreren der Ansprüche 11 bis 15, **dadurch gekennzeichnet, daß** man als weitere hydrolytisch kondensierbare Verbindungen des Siliciums eine oder mehrere Verbindungen der allgemeinen Formel V, gegebenenfalls in vorkondensierter Form, einsetzt,
Yₙ Si Xₘ R₄₋₍ₙ₊ₘ₎ (V)
in der die Reste X, Y und R gleich oder verschieden sind und folgende Bedeutung haben:
R = Alkyl, Alkenyl, Aryl, Alkylaryl oder Arylalkyl,
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
Y = ein Substituent, der einen substituierten oder unsubstituierten 1,4,6-Trioxaspiro-[4,4]-nonan-Rest enthält,
n = 1, 2 oder 3,
m = 1, 2 oder 3, mit n+m ≤ 4.

17. Verfahren nach einem oder mehreren der Ansprüche 11 bis 16, **dadurch gekennzeichnet, daß** man als weitere hydrolytisch kondensierbare Verbindungen eine oder mehrere Verbindungen einsetzt, die sich von Aluminium-, Zirkonium- oder Titanverbindungen der allgemeinen Formel
AlR°₃ oder M X_{y} R_{z}
ableiten, in der M Titan oder Zirkonium bedeutet, die Reste R, R° und X gleich oder verschieden sind, R° Halogen, Hydroxy, Alkoxy oder Acyloxy darstellt, y eine ganze Zahl von 1 bis 4 ist, insbesondere 2 bis 4, z für 0, 1, 2 oder 3 steht, vorzugsweise für 0, 1 oder 2, und X und R wie im Falle der allgemeinen Formel I definiert sind.

18. Verfahren nach einem oder mehreren der Ansprüche 11 bis 17, **dadurch gekennzeichnet, daß** man vor der Fromgebung polymerisierbare organische Monomere und/oder Oligomere und/oder weitere Zusatzstoffe zusetzt.

19. Verwendung der fluoreszierenden Materialien nach einem oder mehreren der Ansprüche 1 bis 10 zur Herstellung von Beschichtungen, von Formkörpern, von Fasern oder von Folien.

20. Verwendung der fluoreszierenden Materialien nach einem oder mehreren der Ansprüche 1 bis 10 zur Herstellung von Bauteilen für die Photonik oder für optische Systeme.

## Claims

1. Fluorescent materials having a matrix on the basis of silicic acid (hetero)polycondensates, with Er³⁺ ions contained therein and having if necessary further additives with the following features:
- the silicic acid (hetero)polycondensate is a hydrolytic (pre)condensate of one or more hydrolytically condensable compounds of silicon and if necessary of other elements from the group B, Al, Ge, P, As, Sb, Sn, Pb, the transition metals, the lanthanides and the actinides, and/or precondensates derived from the above-mentioned compounds, if necessary in the presence of a catalyst and/or of a solvent, by means of the effect of water or of moisture;
- 5 to 100% by mol of the hydrolytically (pre)condensed compounds, on the basis of monomer compounds, are derived from silanes of the general formula I,
SiRₐX_{b} (I)
in which the radicals R and X are the same or different and have the following meaning:
R = alkyl, alkenyl, aryl, alkylaryl or arylalkyl, these radicals being able to be interrupted by oxygen or sulphur atoms or -NH- groups and/or being able to contain spiro, oxirane, cyclic anhydride or isocyanate groups,
X = hydrogen, halogen, hydroxy, alkoxy, acyloxy, alkylcarbonyl, alkoxycarbonyl or NR'₂,
with R' = hydrogen, alkyl or aryl,
a = 1, 2 or 3,
b = 1, 2 or 3,
with a + b = 4;
- the Er³⁺ ions are fixed on nano-scale particles and/or are complexed with one or more organic compounds which have at least one electron pair donor group;
- the nano-scale particles have diameters of ≤ 20 nm;
- the proportion of the nano-scale particles in the fluorescent materials is between 0 and 40% by volume;
- the content of Er³⁺ ions in the fluorescent materials is between 1 and 50% by weight.

2. Fluorescent materials according to claim 1, **characterised in that** the molar ratio of Er³⁺ ions to complexing agent is between 1 : 1 and 1 : 50.

3. Fluorescent materials according to claim 1 or 2, **characterised in that** the particle ratio of nano-scale particles to Er³⁺ ions is between 1 : 1 and 1 : 500.

4. Fluorescent materials according to one or more of the claims 1 to 3, **characterised in that** the complexing agent for the Er³⁺ ions is a crown ether, a thiocyanate, a poryphyrin, a phosphane, a compound with one or more nitrogen atoms or a silane of the general formula II,
SiRₐL_{c}X_{b} (II)
in which the radicals R, L and X are the same or different and have the following meaning:
R = alkyl, alkenyl, aryl, alkylaryl or arylalkyl, these radicals being able to be interrupted by oxygen or sulphur atoms or -NH- groups and/or being able to contain spiro, oxirane, cyclic anhydride or isocyanate groups,
L = alkyl, alkenyl, aryl, alkylaryl or arylalkyl with one or more carboxy, sulphonic acid, phosphoric acid, phosphane or primary and/or secondary amino groups,
X = hydrogen, halogen, hydroxy, alkoxy, acyloxy, alkylcarbonyl, alkoxycarbonyl or NR'₂,
with R' = hydrogen, alkyl or aryl,
a = 0, 1, 2 or 3,
b = 0, 1, 2 or 3,
c = 1, 2, 3 or 4,
with a + b + c = 4.

5. Fluorescent materials according to one or more of the claims 1 to 4, **characterised in that** the nano-scale particles are oxidic particles or metal colloids.

6. Fluorescent materials according to one or more of the claims 1 to 5, **characterised in that** the matrix contains, as further hydrolytically (pre)condensed compounds of silicon, one or more compounds which are derived from silicon compounds of the general formula III,
Rₐ(R"Z')_{b}SiX_{4-(a + b)} (III)
in which the radicals and indices have the following meaning:
R = alkyl, alkenyl, aryl, alkylaryl or arylalkyl,
R" = alkylene or alkenylene, these radicals being able to be interrupted by oxygen or sulphur atoms or -NH- groups,
X = hydrogen, halogen, hydroxy, alkoxy, acyloxy, alkylcarbonyl, alkoxycarbonyl or NR'₂,
with R' = hydrogen, alkyl or aryl,
Z' = halogen or an if necessary substituted amino, amide, aldehyde, alkylcarbonyl, carboxy, mercapto, cyano, alkoxy, alkoxycarbonyl, sulphonic acid, phosphoric acid, acryloxy, methacryloxy, epoxy or vinyl group,
a = 0, 1, 2 or 3,
0, 1, 2 or 3,
with a + b = 1, 2 or 3.

7. Fluorescent materials according to one or more of the claims 1 to 6, **characterised in that** the matrix contains, as further hydrolytically (pre)condensed compounds of silicon, one or more compounds which are derived from silicon compounds of the general formula IV,
{XₙRₖSi[(R²A)₁]_{4-(n + k)}}ₓB (IV)
in which the radicals and indices have the following meaning:
A = O, S, PR', FOR', NHC(O)O or NHC(O)NR',
with R' = hydrogen, alkyl or aryl,
B = a straight-chained or branched organic radical, which is derived from a compound B' with at least one (for I = 1 and A = NHC(O)O or NHC(O)NR') or at least two C=C double bonds and 5 to 50 carbon atoms,
with R' = hydrogen, alkyl or aryl,
R = alkyl, alkenyl, aryl, alkylaryl or arylalkyl,
R² = alkylene, arylene or alkylenearylene,
X = hydrogen, halogen, hydroxy, alkoxy, acyloxy, alkylcarbonyl, alkoxycarbonyl or NR'₂,
with R' = hydrogen, alkyl or aryl,
n = 1, 2 or 3,
k = 0, 1 or 2,
l = 0 or 1,
x = a whole number, of which the maximum value of the number of double bonds in the compound B' minus 1 corresponds or is equal to the number of double bonds in the compound B', when 1 = 1 and A stands for NHC(O)O or NHC(O)NR.

8. Fluorescent materials according to one or more of the claims 1 to 7, **characterised in that** the matrix contains, as further hydrolytically (pre)condensed compounds of silicon, one or more compounds which are derived from silicon compounds of the general formula V,
YₙSiXₘR_{4-(n + m)} (V)
in which the radicals X, Y and R are the same or different and have the following meaning:
R = alkyl, alkenyl, aryl, alkylaryl or arylalkyl,
X = hydrogen, halogen, hydroxy, alkoxy, acyloxy, alkylcarbonyl, alkoxycarbonyl or NR'₂,
with R' = hydrogen, alkyl or aryl,
Y = a substituent which contains a substituted or unsubstituted 1,4,6-trioxaspiro-[4,4]-nonane radical,
n = 1, 2 or 3,
m = 1, 2 or 3, with n + m ≤ 4,

9. Fluorescent materials according to one or more of the claims 1 to 8, **characterised in that** the matrix contains, as further hydrolytically (pre)condensed compounds, one or more compounds which are derived from aluminium, zirconium or titanium compounds of the general formula
AlR°₃ or MX_{y}R_{z}
in which M means titanium or zirconium, the radicals R, R° and X are the same or different, R° represents halogen, hydroxy, alkoxy or acyloxy, y is a whole number from 1 to 4, in particular 2 to 4, z stands for 0, 1, 2 or 3, preferably for 0, 1 or 2, and X and R are defined as in the case of the general formula I.

10. Fluorescent materials according to one or more of the claims 1 to 9, **characterised in that** the matrix contains organic polymers and/or polymerisable organic monomers and/or oligomers.

11. Method for producing fluorescent materials according to one or more of the claims 1 to 10, with the following features:
- a matrix pre-stage is prepared by hydrolytic (pre)condensation of one or more hydrolytically condensable compounds of silicon and if necessary of other elements from the group B, Al, Ge, P, As, Sb, Sn, Pb, the transition metals, the lanthanides and the actinides, and/or precondensates derived from the above-mentioned compounds, if necessary in the presence of a catalyst and/or of a solvent, by means of the effect of water or of moisture, and if necessary by the addition of further additives;
- 5 to 100% by mol of the hydrolytically (pre)condensed compounds, on the basis of monomer compounds, are selected from silanes of the general formula I,
SiRₐX_{b} (I)
in which the radicals R and X are the same or different and have the following meaning:
R = alkyl, alkenyl, aryl, alkylaryl or arylalkyl, these radicals being able to be interrupted by oxygen or sulphur atoms or -NH- groups and/or being able to contain spiro, oxirane, cyclic anhydride or isocyanate groups,
X = hydrogen, halogen, hydroxy, alkoxy, acyloxy, alkylcarbonyl, alkoxycarbonyl or NR'₂,
with R' = hydrogen, alkyl or aryl,
a = 1, 2 or 3,
b = 1, 2 or 3,
with a + b = 4;
- in order to produce a solution of complexed Er³⁺ ions, one or more Er³⁺ salts are complexed in an organic solvent with 1 to 50 mol, relative to one mol Er³⁺ salt, of one or more organic compounds which have at least one electron pair donor group;
- in order to fix the (complexed) Er³⁺ ions on nano-scale particles and in order to produce a colloidal solution of (complexed) Er³⁺ ions fixed on nano-scale particles, either a suspension of nano-scale particles is impregnated with an Er³⁺ salt solution or with the solution of complexed Er³⁺ ions, or nano-scale particles are precipitated as a colloid in the presence of an Er³⁺ salt solution or in the presence of the solution of complexed Er³⁺ ions, the particle ratio of nano-scale particles to (complexed) Er³⁺ ions being between 1 : 1 and 1 : 500;
- the matrix pre-stage and the solution of the complexed Er³⁺ ions or the colloidal solution of (complexed) Er³⁺ ions fixed on nano-scale particles are mixed together and if necessary provided with further additives;
- the resulting mixture is, if necessary, wholly or partially freed of the solvent and subjected to moulding,
- if necessary, the resulting mass is completely polycondensed and/or subjected to a thermally and/or photochemically induced curing.

12. Method according to claim 11, **characterised in that**, as complexing agent for the Er³⁺ ions, a crown ether, a rhodanide, a porphyrin, a phosphane, a compound with one or more nitrogen atoms or a silane of the general formula II is used,
SiRₐL_{c}X_{b} (II)
in which the radicals R, L and X are the same or different and have the following meaning:
R = alkyl, alkenyl, aryl, alkylaryl or arylalkyl, these radicals being able to be interrupted by oxygen or sulphur atoms or -NH- groups and/or being able to contain spiro, oxirane, cyclic anhydride or isocyanate groups,
L = alkyl, alkenyl, aryl, alkylaryl or arylalkyl with one or more carboxy, sulphonic acid, phosphoric acid, phosphane or primary and/or secondary amino groups,
X = hydrogen, halogen, hydroxy, alkoxy, acyloxy, alkylcarbonyl, alkoxycarbonyl or NR'₂,
with R' = hydrogen, alkyl or aryl,
a = 0, 1, 2 or 3,
b = 0, 1, 2 or 3,
c = 1, 2, 3 or 4,
with a + b + c = 4.

13. Method according to claim 11 or 12, **characterised in that** oxidic particles or metal colloids are used as nano-scale particles.

14. Method according to one or more of the claims 11 to 13, **characterised in that**, as further hydrolytically condensable compounds of silicon, one or more compounds of the general formula III, if necessary in precondensed form, are used,
Rₐ(R"Z')_{b}SiX_{4-(a + b)} (III)
in which the radicals and indices have the following meaning:
R = alkyl, alkenyl, aryl, alkylaryl or arylalkyl,
R" = alkylene or alkenylene, these radicals being able to be interrupted by oxygen or sulphur atoms or -NH- groups,
X = hydrogen, halogen, hydroxy, alkoxy, acyloxy, alkylcarbonyl, alkoxycarbonyl or NR'₂,
with R' = hydrogen, alkyl or aryl,
Z' = halogen or an if necessary substituted amino, amide, aldehyde, alkylcarbonyl, carboxy, mercapto, cyano, alkoxy, alkoxycarbonyl, sulphonic acid, phosphoric acid, acryloxy, methacryloxy, epoxy or vinyl group,
a = 0, 1, 2 or 3,
b = 0, 1, 2 or 3,
with a + b = 1, 2 or 3.

15. Method according to one or more of the claims 11 to 14, **characterised in that**, as further hydrolytically condensable componds of silicon, one or more compounds of the general formula IV, if necessary in precondensed form, are used,
{XₙRₖSi[(R²A)₁]_{4-(n + k)}}ₓB (IV)
in which the radicals and indices have the following meaning:
A = O, S, PR', POR', NHC(O)O or NHC(O)NR',
with R' = hydrogen, alkyl or aryl,
B = a straight-chained or branched organic radical, which is derived from a compound B' with at least one (for I = 1 and A = NHC(O)O or NHC(O)NR') or at least two C=C double bonds and 5 to 50 carbon atoms,
with R' = hydrogen, alkyl or aryl,
R = alkyl, alkenyl, aryl, alkylaryl or arylalkyl,
R² = alkylene, arylene or alkylenearylene,
X = hydrogen, halogen, hydroxy, alkoxy, acyloxy, alkylcarbonyl, alkoxycarbonyl or NR'₂,
with R' = hydrogen, alkyl or aryl,
n = 1, 2 or 3,
k = 0, 1 or 2,
l= 0 or 1,
x = a whole number, of which the maximum value of the number of double bonds in the compound B' minus l corresponds or is equal to the number of double bonds in the compound B', when l = 1 and A stands for NHC(O)O or NHC(O)NR.

16. Method according to one or more of the claims 11 to 15, **characterised in that**, as further hydrolytically condensable compounds of silicon, one or more compounds of the general formula V, if necessary in precondensed form, are used,
YₙSiXₘR_{4-(n + m)} (V)
in which the radicals X, Y and R are the same or different and have the following meaning:
R = alkyl, alkenyl, aryl, alkylaryl or arylalkyl,
X = hydrogen, halogen, hydroxy, alkoxy, acyloxy, alkylcarbonyl, alkoxycarbonyl or NR'₂,
with R' = hydrogen, alkyl or aryl,
Y = a substituent which contains a substituted or unsubstituted 1,4,6-trioxaspiro-[4,4]-nonane radical,
n = 1, 2 or 3,
m = 1, 2 or 3, with n + m ≤ 4.

17. Method according to one or more of the claims 11 to 16, **characterised in that**, as further hydrolytically condensable compounds, one or more compounds are used which are derived from aluminium, zirconium or titanium compounds of the general formula
AlR°₃ or MX_{y}R_{z}
in which M means titanium or zirconium, the radicals R, R° and X are the same or different, R° represents halogen, hydroxy, alkoxy or acyloxy, y is a whole number from 1 to 4, in particular 2 to 4, z stands for 0, 1, 2 or 3, preferably for 0, 1 or 2, and X and R are defined as in the case of the general formula I.

18. Method according to one or more of the claims 11 to 17, **characterised in that**, before moulding, polymerisable organic monomers and/or oligomers and/or further additives are added.

19. Use of the fluorescent materials according to one or more of the claims 1 to 10, for the production of coatings, of moulded bodies, of fibres or of films.

20. Use of the fluorescent materials according to one or more of the claims 1 to 10, for the production of components for photonics or for optical systems.

## Revendications

1. Matériaux fluorescents avec une matrice à base d'(hétéro)polycondensats d'acide silicique, ayant des ions Er³⁺ qui y sont contenus et éventuellement d'autres additifs, avec les caractéristiques suivantes :
- l'(hétéro)polycondensat d'acide silicique est un (pré)condensat hydrolytique d'un ou plusieurs composés hydrolytiquement condensables du silicium et éventuellement d'autres éléments du groupe B, Al, Ge, P, As, Sb, Sn, Pb, des métaux de transition, des lanthanides et des actinides et/ou des précondensats dérivés des composés précités, éventuellement en présence d'un catalyseur et/ou d'un solvant, par l'effet de l'eau ou de l'humidité,
- 5 à 100 % en moles des composés hydrolytiquement (pré)condensés, à base de composés monomères, sont dérivés de silanes de formule générale I,
SiRₐX_{b} (I)
dans laquelle les radicaux R et X sont identiques ou différents et possèdent la signification suivante :
R = alkyle, alcényle, aryle, alkylaryle ou arylalkyle, ces radicaux pouvant être interrompus par des atomes d'oxygène ou de soufre ou des groupes NH et/ou pouvant contenir des groupes spiro, oxirannes, anhydrides cycliques ou isocyanates,
X = hydrogène, halogène, hydroxy, alcoxy, alkylcarbonyle, alcoxycarbonyle ou NR'₂,
avec R' = un atome d'hydrogène, un groupe alkyle ou aryle,
a = 1, 2 ou 3,
b = 1, 2 ou 3,
avec a + b = 4,
- les ions Er³⁺ sont fixés à des particules à l'échelle du nanomètre et/ou forment des complexes avec un ou plusieurs composés organiques, qui disposent d'au moins un groupe donneur d'une paire d'électrons,
- les particules à l'échelle du nanomètre présentent des diamètres ≤ 20 nm,
- la part des particules à l'échelle du nanomètre dans les matériaux fluorescents se trouve entre 0 et 40 % en volume,
- la teneur en ions Er³⁺ dans les matériaux fluorescents se trouve entre 1 et 50 % en poids.

2. Matériaux fluorescents selon la revendication 1,
**caractérisés en ce que**
le rapport molaire des ions Er³⁺ au formateur de complexes se trouve entre 1:1 et 1:50.

3. Matériaux fluorescents selon la revendication 1 ou 2,
**caractérisés en ce que**
le rapport de particules des particules à l'échelle du nanomètre aux ions Er³⁺ se trouve entre 1:1 et 1:500.

4. Matériaux fluorescents selon l'une quelconque ou plusieurs des revendications 1 à 3,
**caractérisés en ce que**
le formateur de complexes pour les ions Er³⁺ est un éther-couronne, un thiocyanate, une porphyrine, un phosphane, un composé avec un ou plusieurs atomes d'azote ou un silane de formule générale II,
SiRₐL_{c}X_{b} (II)
dans laquelle les radicaux R, L et X sont identiques ou différents et ont la signification suivante :
R = alkyle, alcényle, aryle, alkylaryle ou arylalkyle, ces radicaux pouvant être interrompus par des atomes d'oxygène ou de soufre ou des groupes -NH- et/ou pouvant contenir des groupes spiro, oxiranne, anhydrides cycliques ou isocyanates,
L = allyle, alkényle, aryle, alkylaryle ou arylalkyle, avec un ou plusieurs groupes carboxy, acide sulfonique, acide phosphorique, phosphane ou amino primaire et/ou secondaire,
X = hydrogène, halogène, hydroxy, alcoxy, acyloxy, alkylcarbonyle, alcoxycarbonyle ou NR'₂,
avec R' = atome d'hydrogène, groupe alkyle ou aryle,
a = 0, 1, 2 ou 3,
b = 0, 1, 2 ou 3,
c = 1, 2, 3 ou 4,
avec a + b + c = 4.

5. Matériaux fluorescents selon l'une quelconque ou plusieurs des revendications 1 à 4,
**caractérisés en ce que**
les particules à l'échelle du nanomètre sont des particules d'oxydes ou des colloïdes métalliques.

6. Matériaux fluorescents selon l'une quelconque ou plusieurs des revendications 1 à 5,
**caractérisés en ce que**
la matrice, comme d'autres composés de silicium (pré)condensés hydrolytiquement, contient un ou plusieurs composés qui dérivent des composés de silicium de formule générale III,
Rₐ(R"Z')_{b}SiX_{4-(a+b)} (III)
dans laquelle les radicaux et indices ont la signification suivante :
R = alkyle, alcényle, aryle, alkylaryle ou arylalkyle,
R" = alkylène ou alcénylène, ces radicaux pouvant être interrompus par des atomes d'oxygène ou de soufre ou des groupes -NH-,
X = hydrogène, halogène, hydroxy, alcoxy, acyloxy, acylcarbonyle, alcoxycarbonyle ou NR'₂,
avec R' = atome d'hydrogène, groupe alkyle ou aryle,
Z' = un atome d'halogène ou un groupe amino, amide, aldéhyde, alkylcarbonyle, carboxyle, mercapto, cyano, alcoxyle, alcoxycarbonyle, acide sulfonique, acide phosphorique, acryloxyle, méthacryloxyle, époxy ou vinyle,
a = 0, 1, 2 ou 3,
b = 0, 1, 2 ou 3,
avec a + b = 1, 2 ou 3.

7. Matériaux fluorescents selon l'une quelconque ou plusieurs des revendications 1 à 6,
**caractérisés en ce que**
la matrice, comme d'autres composés de silicium (pré)condensés hydrolytiquement, contient un ou plusieurs composés qui dérivent des composés de silicium de formule générale IV,
{XₙRₖSi[(R²A)ℓ]₄₋₍ₙ₊ₖ₎}ₓB (IV)
dans laquelle les radicaux et indices ont la signification suivante :
A = O, S, PR', POR', NHC(O)O ou NHC(O)NR',
avec R' = atome d'hydrogène, groupe alkyle ou aryle,
B = radical organique à chaîne droite ou ramifié, qui dérive d'un composé B' avec au moins une double liaison C=C (pour ℓ = 1 et A = NHC(O) ou NHC(O)NR') ou au moins deux doubles liaisons C=C et 5 à 50 atomes de carbone,
avec R' = atome d'hydrogène, groupe alkyle ou aryle,
R = alkyle, alcényle, aryle, alkylaryle ou arylalkyle,
R² = alkylène, arylène ou alkylènarylène,
X = hydrogène, halogène, hydroxy, alcoxy, acyloxy, alkylcarbonyle, alcoxycarbonyle ou NR'₂,
avec R' = atome d'hydrogène, groupe alkyle ou aryle,
n = 1, 2 ou 3,
k = 0, 1 ou 2,
ℓ = 0 ou 1,
x = un nombre entier, dont la valeur maximum correspond au nombre de doubles liaisons dans le composé B' moins 1, ou bien est égale au nombre de doubles liaisons dans le composé B' si ℓ = 1 et A représente NHC(O)O ou NHC(O)NR.

8. Matériaux fluorescents selon l'une quelconque ou plusieurs des revendications 1 à 7,
**caractérisés en ce que**
la matrice, comme d'autres composés de silicium (pré)condensés hydrolytiquement, contient un ou plusieurs composés qui dérivent des composés de silicium de formule générale V,
YₙSiXₘR₄₋₍ₙ₊ₘ₎ (V)
dans laquelle les radicaux X, Y et R sont identiques ou différents et ont la signification suivante :
R = alkyle, alcényle, aryle, alkylaryle ou arylalkyle,
X = hydrogène, halogène, hydroxy, alcoxy, acyloxy, alkylcarbonyle, alcoxycarbonyle ou NR'₂,
avec R' = atome d'hydrogène, groupe alkyle ou aryle,
Y = un substituant, qui contient un radical 1,4,6-trioxaspiro-[4,4]nonane, substitué ou non substitué,
n = 1, 2 ou 3,
m = 1, 2 ou 3, avec n+m ≤ 4.

9. Matériaux fluorescents selon l'une quelconque ou plusieurs des revendications 1 à 8,
**caractérisé en ce que**
la matrice, comme d'autres composés de silicium (pré)condensés hydrolytiquement, contient un ou plusieurs composés qui dérivent des composés d'aluminium, de zirconium ou de titane de formule générale
AℓR°₃ ou MX_{y}R_{z}
dans laquelle M signifie titane ou zirconium, les radicaux R, R° et X sont identiques ou différents, R° représente un halogène, hydroxy, alcoxy ou acyloxy, y est un nombre entier de 1 à 4, en particulier de 2 à 4, z représente 0, 1, 2 ou 3, de préférence 0, 1 ou 2, et X et R sont définis comme dans le cas de la formule générale I.

10. Matériaux fluorescents selon l'une quelconque ou plusieurs des revendications 1 à 9,
**caractérisés en ce que**
la matrice contient des polymères organiques et/ou des monomères organiques polymérisables et/ou des oligomères.

11. Procédé pour la préparation de matériaux fluorescents selon l'une quelconque ou plusieurs des revendications 1 à 10, ayant les caractéristiques suivantes :
- on prépare une phase préparatoire de matrice par (pré)condensation d'un ou plusieurs composés de silicium condensables hydrolytiquement et éventuellement d'autres éléments du groupe B, Al, Ge, P, As, Sb, Sn, Pb, des métaux de transition, des lanthanides et des actinides et/ou des précondensats dérivés des composés précités, éventuellement en présence d'un catalyseur et/ou d'un solvant, par l'effet de l'eau ou de l'humidité, et éventuellement par addition d'autres additifs,
- 5 à 100 % en moles des composés (pré)condensés hydrolytiquement, à base des composés monomères, sont choisis parmi des silanes de formule générale I,
SiRₐX_{b} (I)
dans laquelle les radicaux R et X sont identiques ou différents et possèdent la signification suivante :
R = alkyle, alcényle, aryle, alkylaryle ou arylalkyle, ces radicaux pouvant être interrompus par des atomes d'oxygène ou de soufre ou des groupes NH et/ou pouvant contenir des groupes spiro, oxirannes, anhydrides cycliques ou isocyanates,
X = hydrogène, halogène, hydroxy, alcoxy, alkylcarbonyle, alcoxycarbonyle ou NR'₂,
avec R' = atome d'hydrogène, groupe alkyle ou aryle,
a = 1, 2 ou 3,
b = 1, 2 ou 3,
avec a + b = 4,
• pour la préparation d'une solution d'ions Er³⁺ formant des complexes, on forme des complexes d'un ou plusieurs sels Er³⁺ dans un solvant organique de 1 à 50 moles, par rapport à une mole d'un sel Er³⁺, d'un ou plusieurs composés organiques, qui disposent d'au moins un groupe donneur d'une paire d'électrons ; pour la fixation des ions Er³⁺ (formant des complexes) à des particules à l'échelle du nanomètre et pour la préparation d'une solution colloïdale d'ions Er³⁺ fixés à des particules à l'échelle du nanomètre, soit on imprègne une suspension de particules à l'échelle du nanomètre d'une solution de sel Er³⁺ ou d'une solution d'ions Er³⁺ formant des complexes, soit on précipite des particules à l'échelle du nanomètre comme colloïde en présence d'une solution de sel Er³⁺ ou en présence de la solution des ions Er³⁺ formant des complexes, le rapport de particules des particules à l'échelle du nanomètre aux ions Er³⁺ (formant des complexes) se trouve entre 1:1 et 1:500,
• la phase préparatoire de matrice et la solution des ions Er³⁺ formant des complexes ou la solution colloïdale d'ions Er³⁺ (formant des complexes) fixés aux particules à l'échelle du nanomètre sont mélangées ensemble et pourvues éventuellement d'autres additifs,
• le mélange résultant est éventuellement libéré du solvant, complètement ou partiellement, et soumis à la mise en forme,
• la masse résultante est éventuellement complètement poly-condensée et/ou soumise à un durcissement induit par des moyens thermiques et/ou photochimiques.

12. Procédé selon la revendication 11,
**caractérisé en ce que**
comme formateur de complexes pour les ions Er³⁺ on utilise un éther-couronne, un sulfocyanate, une porphyrine, un phosphane, un composé avec un ou plusieurs atomes d'azote ou un silane de formule générale II,
SiRₐL_{c}X_{b} (II)
dans laquelle les radicaux R, L et X sont identiques ou différents et ont la signification suivante :
R = alkyle, alcényle, aryle, alkylaryle ou arylalkyle, ces radicaux pouvant être interrompus par des atomes d'oxygène ou de soufre ou des groupes -NH- et/ou pouvant contenir des groupes spiro, oxirannes, des groupes cycliques anhydrides ou isocyanates,
L = alkyle, alcényle, aryle, alkylaryle ou arylalkyle, avec un ou plusieurs groupes carboxyle, acide sulfonique, acide phosphorique, phosphane ou amino primaire et/ou secondaire,
X = hydrogène, halogène, hydroxy, alcoxy, acyloxy, alkylcarbonyle, alcoxycarbonyle ou NR'₂,
avec R' = atome d'hydrogène, groupe alkyle ou aryle,
a = 0, 1, 2 ou 3,
b = 0, 1, 2 ou 3,
c = 1, 2, 3 ou 4,
avec a + b + c = 4.

13. Procédé selon la revendication 11 ou 12,
**caractérisé en ce que**
comme particules à l'échelle du nanomètre on utilise des particules d'oxydes ou des colloïdes métalliques.

14. Procédé selon l'une quelconque ou plusieurs des revendications 11 à 13,
**caractérisé en ce que**
comme autres composés de silicium condensables hydrolytiquement, on utilise un ou plusieurs composés de formule générale III, éventuellement sous forme précondensée,
Rₐ(R"Z')_{b}SiX_{4-(a+b)} (III)
dans laquelle les radicaux et indices ont la signification suivante :
R = alkyle, alcényle, aryle, alkylaryle ou arylalkyle,
R" = alkylène ou alcénylène, ces radicaux pouvant être interrompus par des atomes d'oxygène ou de soufre ou des groupes -NH-,
X = hydrogène, halogène, hydroxy, alcoxy, acyloxy, acylcarbonyle, alcoxycarbonyle ou NR'₂,
avec R' = hydrogène, groupe alkyle ou aryle,
Z' = halogène ou un groupe amino, amide, aldéhyde, alkylcarbonyle, carboxyle, mercapto, cyano, alcoxyle, alcoxycarbonyle, acide sulfonique, acide phosphorique, acryloxy, méthacryloxy, époxy ou vinyle,
a = 0, 1, 2 ou 3,
b = 0, 1, 2 ou 3,
avec a + b = 1, 2 ou 3.

15. Procédé selon l'une quelconque ou plusieurs des revendications 11 à 14,
**caractérisé en ce que**
comme autres composés hydrolytiquement condensables du silicium, on utilise un ou plusieurs composés de formule générale IV, éventuellement sous forme précondensée,
{XₙRₖSi[(R²A)ℓ]₄₋₍ₙ₊ₖ₎}ₓB (IV)
dans laquelle les radicaux et indices ont la signification suivante :
A = O, S, PR', POR', NHC(O)O ou NHC(O)NR',
avec R' = atome d'hydrogène, groupe alkyle ou aryle,
B = radical organique à chaîne droite ou ramifié, qui dérive d'un composé B' avec au moins une double liaison C=C (pour ℓ = 1 et A = NHC(O) ou NHC(O)NR') ou au moins deux doubles liaisons C=C et 5 à 50 atomes de carbone,
avec R' = atome d'hydrogène, groupe alkyle ou aryle,
R = alkyle, alcényle, aryle, alkylaryle ou arylalkyle,
R² = alkylène, arylène ou alkylènarylène,
X = hydrogène, halogène, hydroxyle, alcoxy, acyloxy, alkylcarbonyle, alcoxycarbonyle ou NR'₂,
avec R' = atome d'hydrogène, groupe alkyle ou aryle,
n = 1, 2 ou 3,
k = 0, 1 ou 2,
ℓ= 0 ou 1,
x = un nombre entier, dont la valeur maximum correspond au nombre de doubles liaisons dans le composé B' moins 1, ou bien est égale au nombre de doubles liaisons dans le composé B' si ℓ = 1 et A représente NHC(O)O ou NHC(O)NR.

16. Procédé selon l'une quelconque ou plusieurs des revendications 11 à 15,
**caractérisé en ce que**
comme autres composés hydrolytiquement condensables du silicium, on utilise un ou plusieurs composés de formule générale V, éventuellement sous forme précondensée,
YₙSiXₘR₄₋₍ₙ₊ₘ₎ (V)
dans laquelle les radicaux X, Y et R sont identiques ou différents et ont la signification suivante :
R = alkyle, alcényle, aryle, alkylaryle ou arylalkyle,
X = hydrogène, halogène, hydroxyle, alcoxy, acyloxy, alkylcarbonyle, alcoxycarbonyle ou NR'₂,
avec R' = atome d'hydrogène, groupe alkyle ou aryle,
Y = un substituant, qui contient un radical 1,4,6-trioxaspiro-[4,4]nonane, substitué ou non substitué,
n = 1, 2 ou 3,
m = 1, 2 ou 3, avec n+m ≤ 4.

17. Procédé selon l'une quelconque ou plusieurs des revendications 11 à 16,
**caractérisé en ce que**
comme autres composés hydrolytiquement condensables du silicium, on utilise un ou plusieurs composés qui dérivent de composés d'aluminium, de zirconium ou de titane, de formule générale
AℓR°₃ ou MX_{y}R_{z}
dans laquelle M signifie titane ou zirconium, les radicaux R, R° et X sont identiques ou différents, R° représente halogène, hydroxy, alcoxy ou acyloxy, y est un nombre entier de 1 à 4, en particulier de 2 à 4, z représente 0, 1, 2 ou 3, de préférence 0, 1 ou 2, et X et R sont définis comme dans le cas de la formule générale I.

18. Procédé selon l'une quelconque ou plusieurs des revendications 11 à 17,
**caractérisé en ce qu'**
avant la mise en forme on ajoute des monomères organiques polymérisables et/ou des oligomères et/ou d'autres additifs.

19. Utilisation des matériaux fluorescents selon l'une quelconque ou plusieurs des revendications 1 à 10, pour la préparation de revêtements, d'objets, de fibres ou de feuilles.

20. Utilisation des matériaux fluorescents selon l'une quelconque ou plusieurs des revendications 1 à 10, pour la production de pièces pour la photonique ou pour des systèmes optiques.
